(19) Europäisches Patentamt
European Patent Office
Office européen des brevets

(11) **EP 4 589 898 A1**

(12) **EUROPEAN PATENT APPLICATION**
published in accordance with Art. 153(4) EPC

(43) Date of publication:
**23.07.2025 Bulletin 2025/30**

(21) Application number: **23896505.7**

(22) Date of filing: **13.11.2023**

(51) International Patent Classification (IPC):
***H04L 27/00*** (2006.01)

(52) Cooperative Patent Classification (CPC):
**H04L 27/00; H04L 27/26**

(86) International application number:
**PCT/CN2023/131289**

(87) International publication number:
**WO 2024/114353 (06.06.2024 Gazette 2024/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.11.2022 CN 202211500478
27.12.2022 CN 202211690587**

(71) Applicant: **Huawei Technologies Co., Ltd.
Shenzhen, Guangdong 518129 (CN)**

(72) Inventor: **LI, Qiang
Shenzhen, Guangdong 518129 (CN)**

(74) Representative: **MERH-IP Matias Erny Reichl
Hoffmann
Patentanwälte PartG mbB
Paul-Heyse-Straße 29
80336 München (DE)**

(54) **FREQUENCY OFFSET CORRECTION METHOD AND COMMUNICATION APPARATUS**

(57) This application provides a frequency offset correction method and a communication apparatus, and relates to the field of wireless communication technologies. In this application, a signal energy loss can be reduced, interference can be reduced, and demodulation performance can be improved. The method includes: A second device performs down-conversion by using a first local oscillator signal, to receive a first reference signal from a first device, and adjusts the first local oscillator signal based on a receiving result of the first reference signal, to obtain a second local oscillator signal, where a frequency offset of the second local oscillator signal is less than a frequency offset of the first local oscillator signal. The second device performs down-conversion by using the second local oscillator signal, to receive a first data signal from the first device, where a guard band of the first reference signal is greater than a guard band of the first data signal.

FIG. 10

**Description**

This application claims priorities to Chinese Patent Application No. 202211500478.1, filed with the China National Intellectual Property Administration on November 28, 2022 and entitled "FREQUENCY OFFSET CORRECTION METHOD", and to Chinese Patent Application No. 202211690587.4, filed with the China National Intellectual Property Administration on December 27, 2022 and entitled "FREQUENCY OFFSET CORRECTION METHOD AND COMMUNICATION APPARATUS", both of which are incorporated herein by reference in their entireties.

**TECHNICAL FIELD**

This application relates to the field of wireless communication, and in particular, to a frequency offset correction method and a communication apparatus.

**BACKGROUND**

In a wireless communication system, a receive end device performs down-conversion by using a local oscillator, to receive a radio frequency signal from a transmit end device. However, when stability of the local oscillator is poor, there is a specific frequency offset between a frequency of a local oscillator signal generated by the local oscillator and an ideal frequency. Correspondingly, the receive end device cannot accurately perform frequency migration, in other words, cannot accurately convert the radio frequency signal to an ideal passband frequency range. Consequently, a signal energy loss and interference of an adjacent-band signal are caused, severely affecting demodulation performance.

**SUMMARY**

This application provides a frequency offset correction method and a communication apparatus, to reduce a signal energy loss, reduce interference, and improve demodulation performance. To achieve the foregoing objective, the following technical solutions are used in this application.

According to a first aspect, a frequency offset correction method is provided. The method may be performed by a second device, or may be performed by a chip used in the second device. The following provides descriptions by using an example in which the method is performed by the second device.

The second device performs down-conversion by using a first local oscillator signal, to receive a first reference signal from a first device. The second device adjusts the first local oscillator signal based on a receiving result of the first reference signal, to obtain a second local oscillator signal, where a frequency offset of the second local oscillator signal is less than a frequency offset of the first local oscillator signal. The second device performs down-conversion by using the second local oscillator signal, to receive a first data signal from the first device, where a guard band of the first reference signal is greater than a guard band of the first data signal.

In other words, the second device performs frequency offset correction based on the receiving result of the first reference signal, in other words, adjusts the first local oscillator signal, to obtain the second local oscillator signal, so that the frequency offset of the second local oscillator signal is less than the frequency offset of the first local oscillator signal, to achieve effect of decreasing a residual frequency offset of the local oscillator signal. When performing down-conversion by using the second local oscillator signal, the second device can accurately perform spectrum migration, for example, accurately migrate a spectrum of the first data signal to an expected frequency range (for example, a band-pass range that is set by a filter of a receiver on a second device side), to reduce a data signal energy loss. This also helps reduce interference to the first data signal caused by a signal on an adjacent channel and improve demodulation performance.

In a possible design, after that the second device performs down-conversion by using the second local oscillator signal, to receive a first data signal from the first device, the method further includes: The second device performs down-conversion by using a third local oscillator signal, to receive a second reference signal from the first device, where a frequency of the third local oscillator signal is different from a frequency of the second local oscillator signal, and a guard band of the second reference signal is the same as a guard band of the first reference signal. The second device adjusts the third local oscillator signal based on a receiving result of the second reference signal, to obtain a fourth local oscillator signal, where a frequency offset of the fourth local oscillator signal is less than a frequency offset of the third local oscillator signal. The second device performs down-conversion by using the fourth local oscillator signal, to receive a second data signal from the first device, where a guard band of the second data signal is the same as the guard band of the first data signal.

In other words, when a frequency offset of the second device reaches a high level again after a period of accumulation, the second device may receive a reference signal again, namely, the second reference signal, and perform a frequency offset correction process repeatedly, in other words, adjust the third local oscillator signal, to obtain the fourth local oscillator signal, so as to decrease the residual frequency offset of the local oscillator signal again. In this way, the frequency offset of the fourth local oscillator signal is less than the frequency offset of the third local oscillator signal. When performing down-conversion by using the fourth local oscillator signal, the second device can accurately perform spectrum migration, for example, accurately migrate a spectrum of the second data signal to an expected frequency range (for example, a band-pass range that is set by the filter of the receiver on the second device side), to reduce a data signal energy loss. This also helps reduce interference to the second data signal caused by a signal on an adjacent channel and improve demodulation performance.

In a possible design, a difference between a frequency of the fourth local oscillator signal and the frequency of the second local oscillator signal is less than a threshold. For example, the frequency of the fourth local oscillator signal is the same as the frequency of the second local oscillator signal. In other words, the second device performs the frequency offset correction process again, to decrease the residual frequency offset of the local oscillator signal to a low level.

In a possible design, a bandwidth occupied by the second data signal is the same as a bandwidth occupied by the first data signal. In other words, when a data transmission rate is fixed, the first device transmits the first data signal and the second data signal by using a same bandwidth. For the first device serving as a signal transmit end, processing complexity of the first device can be reduced, and the signal bandwidth does not need to be frequently updated. For the second device serving as a signal receive end, the second device may also receive the data signal by using the fixed bandwidth. This also helps reduce processing complexity of the second device.

In a possible design, a bandwidth occupied by the second reference signal is the same as a bandwidth occupied by the first reference signal. In other words, the first device transmits the first reference signal and the second reference signal by using a same bandwidth. For the first device serving as the signal transmit end, the processing complexity of the first device can be reduced, and the signal bandwidth does not need to be frequently updated. For the second device serving as the signal receive end, the second device may also receive the reference signal by using the fixed bandwidth, and the second device does not need to set a component like the filter to be bandwidth-adjustable. This also helps reduce the processing complexity of the second device.

In a possible design, a time length of an interval between the second reference signal and the first reference signal is fixed. In other words, the first device periodically sends a reference signal. In comparison with aperiodic transmission of the reference signal, the second device does not need to continuously listen to the reference signal, to reduce power consumption of listening to the reference signal by the second device.

In a possible design, the receiving result of the first reference signal includes a first energy detection result and a second energy detection result, the first energy detection result is obtained by performing filtering processing on the first reference signal by a first filter, the second energy detection result is obtained by performing filtering processing on the first reference signal by a second filter, and a passband frequency of the first filter is less than a passband frequency of the second filter. When the first energy detection result is less than the second energy detection result, the frequency of the second local oscillator signal is greater than a frequency of the first local oscillator signal. In other words, even if a negative frequency offset occurs on the second device side, the second device can decrease the residual frequency offset of the local oscillator signal of the second device to a low level through the frequency offset correction process.

In a possible design, the receiving result of the first reference signal includes a first energy detection result and a second energy detection result, the first energy detection result is obtained by performing filtering processing on the first reference signal by a first filter, the second energy detection result is obtained by performing filtering processing on the first reference signal by a second filter, and a passband frequency of the first filter is less than a passband frequency of the second filter. When the first energy detection result is greater than the second energy detection result, the frequency of the second local oscillator signal is less than a frequency of the first local oscillator signal. In other words, even if a positive frequency offset occurs on the second device side, the second device can decrease the residual frequency offset of the local oscillator signal of the second device to a low level through the frequency offset correction process.

In a possible design, after that the second device performs down-conversion by using a first local oscillator signal, to receive a first reference signal from a first device, and before that the second device performs down-conversion by using the second local oscillator signal, to receive a first data signal from the first device, the method further includes: The second device performs time synchronization based on the first reference signal, to obtain synchronization information, where the synchronization information indicates a time domain location of the first data signal.

In this way, after performing time synchronization based on the first reference signal, the second device may determine a time unit in which the first data signal starts to be transmitted, to listen to the first data signal in the corresponding time unit. Compared with a case in which the second device continuously listens to the data signal, that the second device listens to the first data signal based on the synchronization information helps reduce power consumption overheads of continuously listening to the data signal.

In a possible design, a demodulation scheme of the first reference signal is on-off-keying OOK, and a demodulation scheme of the first data signal is frequency shift keying FSK.

In a possible design, a demodulation scheme of the first reference signal is FSK, and a demodulation scheme of the first data signal is FSK.

In a possible design, a demodulation scheme of the first reference signal is OOK, and a demodulation scheme of the first data signal is OOK.

In a possible design, a demodulation scheme of the first reference signal is FSK, and a demodulation scheme of the first data signal is OOK.

In a possible design, when the demodulation scheme of the first reference signal is FSK, and the demodulation scheme of the first data signal is FSK, a modulation order of the first reference signal is lower than a modulation order of the first data signal.

In this way, when a bandwidth occupied by each FSK candidate frequency corresponding to the first data signal is the same as a bandwidth occupied by each FSK candidate frequency corresponding to the first reference signal, the bandwidth occupied by the first reference signal is less than the bandwidth occupied by the first data signal. When the second device performs frequency offset correction based on the receiving result of the first reference signal, it is more convenient for the second device to accurately estimate a frequency offset direction, and better frequency offset correction performance can be implemented.

In a possible design, when the demodulation scheme of the first reference signal is FSK, and the demodulation scheme of the first data signal is FSK, a modulation order of the first reference signal is the same as a modulation order of the first data signal, there is a mapping relationship between an information bit transmitted by using the first reference signal and a first frequency, the first frequency is a part of M candidate frequencies, the first frequency is used to demodulate the first reference signal to obtain the information bit, and M is the modulation order of the first reference signal.

In this way, when a bandwidth occupied by each FSK candidate frequency corresponding to the first data signal is the same as a bandwidth occupied by each FSK candidate frequency corresponding to the first reference signal, the bandwidth occupied by the first reference signal is less than the bandwidth occupied by the first data signal. When the second device performs frequency offset correction based on the receiving result of the first reference signal, better frequency offset correction performance can be implemented.

In a possible design, when the demodulation scheme of the first reference signal is OOK, a quantity of channels for the first reference signal is less than a quantity of channels for the first data signal.

In this way, when each channel bandwidth corresponding to the first data signal is the same as each channel bandwidth corresponding to the first reference signal, the bandwidth occupied by the first reference signal is less than the bandwidth occupied by the first data signal. When the second device performs frequency offset correction based on the receiving result of the first reference signal, better frequency offset correction performance can be implemented.

In a possible design, when a demodulation scheme of the first reference signal is OOK or FSK, values of different elements in a bit sequence transmitted by using the first reference signal are the same, and in duration of the first reference signal, a frequency location and a bandwidth that are occupied by the first reference signal are fixed.

In this way, the bandwidth occupied by the first reference signal is less than the bandwidth occupied by the first data signal. When the second device performs frequency offset correction based on the receiving result of the first reference signal, better frequency offset correction performance can be implemented.

In a possible design, the bandwidth occupied by the first reference signal is less than the bandwidth occupied by the first data signal.

In this way, when the second device performs frequency offset correction based on the receiving result of the first reference signal, better frequency offset correction performance can be implemented.

In a possible design, the guard band of the first data signal is 0, to save power resources and spectrum resources, without causing deterioration of demodulation performance.

In a possible design, a center frequency of the first reference signal is the same as a center frequency of the first data signal, to better resist a frequency offset.

According to a second aspect, a frequency offset correction method is provided. The method may be performed by a first device, or may be performed by a chip used in the first device. The following provides descriptions by using an example in which the method is performed by the first device.

The first device generates a first reference signal and a first data signal. The first device sends the first reference signal and the first data signal to a second device, where a guard band of the first reference signal is greater than a guard band of the first data signal.

In a possible design, after that the first device sends the first reference signal and the first data signal to a second device, the method further includes: The first device generates a second reference signal and a second data signal. The first device sends the second reference signal and the second data signal to the second device, where a guard band of the second reference signal is the same as the guard band of the first reference signal, and a guard band of the second data signal is the same as the guard band of the first data signal.

In a possible design, a bandwidth occupied by the second data signal is the same as a bandwidth occupied by the first data signal.

In a possible design, a bandwidth occupied by the second reference signal is the same as a bandwidth occupied by the first reference signal.

In a possible design, a time length of an interval between the second reference signal and the first reference signal is fixed.

In a possible design, a modulation scheme of the first reference signal is on-off-keying OOK, and a modulation scheme of the first data signal is frequency shift keying FSK.

In a possible design, a modulation scheme of the first reference signal is FSK, and a modulation scheme of the first data signal is FSK.

In a possible design, a modulation scheme of the first reference signal is OOK, and a modulation scheme of the first data signal is OOK.

In a possible design, a modulation scheme of the first reference signal is FSK, and a modulation scheme of the first data signal is OOK.

In a possible design, when the modulation scheme of the first reference signal is FSK, and the modulation scheme of the first data signal is FSK, a modulation order of the first reference signal is lower than a modulation order of the first data signal.

In a possible design, when the modulation scheme of the first reference signal is FSK, and the modulation scheme of the first data signal is FSK, a modulation order of the first reference signal is the same as a modulation order of the first data signal, there is a mapping relationship between an information bit transmitted by using the first reference signal and a first frequency, the first frequency is a part of M candidate frequencies, the first frequency is used to modulate the information bit to obtain the first reference signal, and M is the modulation order of the first reference signal.

In a possible design, when the modulation scheme of the first reference signal is OOK, a quantity of channels for the first reference signal is less than a quantity of channels for the first data signal.

In a possible design, when a modulation scheme of the first reference signal is OOK or FSK, values of different elements in a bit sequence transmitted by using the first reference signal are the same, and in duration of the first reference signal, a frequency location and a bandwidth that are occupied by the first reference signal are fixed.

In a possible design, the bandwidth occupied by the first reference signal is less than the bandwidth occupied by the first data signal.

In a possible design, the guard band of the first data signal is 0.

In a possible design, a center frequency of the first reference signal is the same as a center frequency of the first data signal.

According to a third aspect, a communication apparatus is provided. The communication apparatus includes a processor. The processor is coupled to a memory, and is configured to read and execute instructions in the memory, so that the communication apparatus performs the method performed by the second device in any one of the foregoing aspects or the possible designs of the foregoing aspects. The communication apparatus may be the second device in any one of the first aspect or the possible designs of the first aspect, or a chip that implements a function of the second device.

According to a fourth aspect, a chip is provided. The chip includes a processing circuit and an input/output interface. The input/output interface is configured to communicate with a module outside the chip. For example, the chip may be a chip that implements a function of the second device in any one of the first aspect or the possible designs of the first aspect. The processing circuit is configured to run a computer program or instructions, to implement the method in any one of the first aspect or the possible designs of the first aspect.

According to a fifth aspect, a communication apparatus is provided. The communication apparatus includes a processor. The processor is coupled to a memory, and is configured to read and execute instructions in the memory, so that the communication apparatus performs the method performed by the first device in any one of the foregoing aspects or the possible designs of the foregoing aspects. The communication apparatus may be the first device in any one of the second aspect or the possible designs of the second aspect, or a chip that implements a function of the first device.

According to a sixth aspect, a chip is provided. The chip includes a processing circuit and an input/output interface. The input/output interface is configured to communicate with a module outside the chip. For example, the chip may be a chip that implements a function of the first device in any one of the second aspect or the possible designs of the second aspect. The processing circuit is configured to run a computer program or instructions, to implement the method in any one of the second aspect or the possible designs of the second aspect.

According to a seventh aspect, a computer-readable storage medium is provided. The computer-readable storage medium stores instructions. When the instructions are run on a computer, the computer is enabled to perform the method in any one of the foregoing aspects.

According to an eighth aspect, a computer program product including instructions is provided. When the computer program product runs on a computer, the computer is enabled to perform the method in any one of the foregoing aspects.

According to a ninth aspect, a circuit system is provided. The circuit system includes a processing circuit, and the processing circuit is configured to perform the method in any one of the foregoing aspects.

According to a tenth aspect, a communication system is provided, including a second device and a first device. The second device is configured to perform the method in any one of the first aspect and the possible designs of the first aspect, and the first device is configured to perform the method in any one of the second aspect and the possible designs of the second aspect.

For technical effects brought by any design in the second aspect to the tenth aspect, refer to beneficial effects in the corresponding method provided above. Details are not described herein again.

## BRIEF DESCRIPTION OF DRAWINGS

FIG. 1a is a diagram of an architecture of a communication system according to an embodiment of this application;
FIG. 1b is a diagram of an architecture of another communication system according to an embodiment of this application;
FIG. 1c is a diagram of an architecture of still another communication system according to an embodiment of this application;
FIG. 2 is a diagram of a modulation scheme according to an embodiment of this application;
FIG. 3 is a diagram of another modulation scheme according to an embodiment of this application;
FIG. 4 is a diagram of still another modulation scheme according to an embodiment of this application;
FIG. 5 is a diagram of yet another modulation scheme according to an embodiment of this application;
FIG. 6 is a diagram of a structure of a receiver according to an embodiment of this application;
FIG. 7 is a diagram of envelope detection according to an embodiment of this application;
FIG. 8 is a diagram of one type of spectrum migration according to an embodiment of this application;
FIG. 9 is a diagram of another type of spectrum migration according to an embodiment of this application;
FIG. 10 is a schematic flowchart of a frequency offset correction method according to an embodiment of this application;
FIG. 11 is a diagram of a signal transmission scenario according to an embodiment of this application;
FIG. 12 is a diagram of another signal transmission scenario according to an embodiment of this application;
FIG. 13 is a diagram of still another signal transmission scenario according to an embodiment of this application;
FIG. 14 is a diagram of yet another signal transmission scenario according to an embodiment of this application;
FIG. 15 is a diagram of a frequency offset correction process according to an embodiment of this application;
FIG. 16 is a diagram of another frequency offset correction process according to an embodiment of this application;
FIG. 17 is a diagram of frequency offset correction effects according to an embodiment of this application;
FIG. 18 is a schematic flowchart of another frequency offset correction method according to an embodiment of this application;
FIG. 19 is a schematic flowchart of still another frequency offset correction method according to an embodiment of this application;
FIG. 20 is a schematic flowchart of yet another frequency offset correction method according to an embodiment of this application;
FIG. 21 is a diagram of a structure of a communication apparatus according to an embodiment of this application; and
FIG. 22 is a diagram of a structure of another communication apparatus according to an embodiment of this application.

## DESCRIPTION OF EMBODIMENTS

The following describes the technical solutions of this application with reference to the accompanying drawings.

The technical solutions in embodiments of this application may be applied to various communication systems, for example, a universal mobile telecommunications system (universal mobile telecommunications system, UMTS), a wireless local area network (wireless local area network, WLAN), a wireless fidelity (wireless fidelity, Wi-Fi) system, a wired network, a vehicle to everything (vehicle to everything, V2X) communication system, a device-to-device (device-to-device, D2D) communication system, an internet of vehicles communication system, a 4th generation (4th generation, 4G) mobile communication system, for example, a long term evolution (long term evolution, LTE) system or a worldwide interoperability for microwave access (worldwide interoperability for microwave access, WiMAX) communication system, a 5th generation (5th generation, 5G) mobile communication system, for example, a new radio (new radio, NR) system, and a 6th generation (6th generation, 6G) mobile communication system.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, the terms such as "example" or "for example" represent giving an example, an illustration, or a description. Any embodiment or design scheme described as an "example" in this application should not be explained as being more preferred or having more advantages than another embodiment or design scheme. Exactly, the term "for example" is used to present a concept in a specific manner.

In embodiments of this application, "of (of)", "relevant (corresponding, relevant)", and "corresponding (corresponding)" may be interchangeably used sometimes. It should be noted that meanings expressed by the terms are consistent when differences of the terms are not emphasized.

A network architecture and a service scenario described in embodiments of this application are intended to describe the technical solutions in embodiments of this application more clearly, and do not constitute a limitation on the technical solutions provided in embodiments of this application. A person of ordinary skill in the art may learn that the technical solutions provided in embodiments of this application are also applicable to a similar technical problem as the network architecture evolves and a new service scenario emerges.

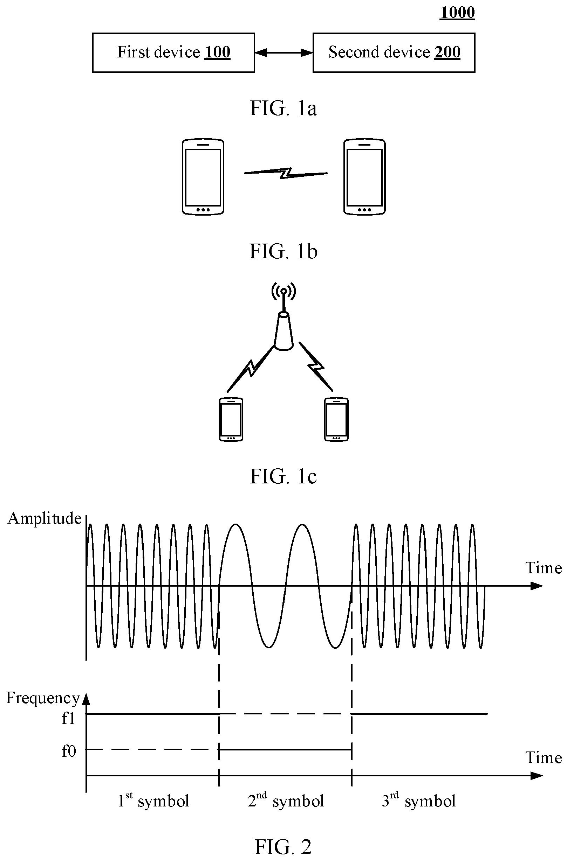

For ease of understanding embodiments of this application, a communication system shown in FIG. 1a is first used as an example to describe in detail a communication system applicable to embodiments of this application. For example, FIG. 1a is a diagram of an architecture of a communication system to which a method according to embodiments of this application is applicable.

As shown in FIG. 1a, the communication system 1000 includes a first device 100 and a second device 200.

In some embodiments, both the first device 100 and the second device 200 may be terminal devices, as shown in FIG. 1b. Optionally, the communication system 1000 further includes a network device (not shown in FIG. 1b). The first device 100 communicates with the second device 200 through a sidelink (or a PC5 interface), and the second device 200 may communicate with the network device via the first device 100. Both the first device 100 and the second device 200 may be within network coverage, one of the first device 100 and the second device 200 may be within the network coverage and the other may be outside the network coverage, or both the first device 100 and the second device 200 may be outside the network coverage. When both the first device 100 and the second device 200 are within the network coverage, a serving base station of the first device 100 may be the same as or different from a serving base station of the second device 200.

In some other embodiments, the first device 100 is a terminal device, and the second device 200 is a network device. Alternatively, the first device 100 is a network device, and the second device 200 is a terminal device, as shown in FIG. 1c.

The terminal device is a terminal having a wireless transceiver function. In this application, the terminal device may also be referred to as a terminal, user equipment (user equipment, UE), an access terminal, a subscriber unit, a subscriber station, a mobile station, a remote station, a remote terminal, a mobile device, a user terminal, a wireless communication device, a user agent, or a user apparatus. The terminal in embodiments of this application may be a road side unit (road side unit, RSU), a mobile phone (mobile phone), a tablet computer (pad), an uncrewed aerial vehicle, a computer having a wireless transceiver function, customer premises equipment (customer premises equipment, CPE), a virtual reality (virtual reality, VR) terminal, an augmented reality (augmented reality, AR) terminal, an internet of things terminal, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal in a 5G network, a terminal in a future evolved network, or the like.

For another example, in this application, the terminal device may be an express delivery terminal (for example, a device that can monitor a position of a cargo vehicle, or a device that can monitor a temperature and humidity of cargo) in intelligent logistics, a wireless terminal (for example, a wearable device that can collect related data of poultry and livestock) in intelligent agriculture, a wireless terminal (for example, a smart elevator, a fire monitoring device, or a smart meter) in intelligent architecture, a wireless terminal (for example, a wearable device that can monitor a physiological status of a person or an animal) in intelligent healthcare, a wireless terminal (for example, an intelligent bus, an intelligent vehicle, a shared bicycle, a charging pile monitoring device, intelligent traffic lights, or an intelligent monitoring and intelligent parking device) in intelligent transportation, or a wireless terminal (for example, a vending machine, a self-service checkout machine, or an unmanned convenience store) in intelligent retail. For another example, in this application, the terminal device may be a vehicle-mounted module, a vehicle-mounted assembly, a vehicle-mounted part, a vehicle-mounted chip, or a vehicle-mounted unit that is built in a vehicle as one or more parts or units. The vehicle may implement the method provided in this application by using the vehicle-mounted module, the vehicle-mounted assembly, the vehicle-mounted part, the vehicle-mounted chip, or the vehicle-mounted unit that is built in the vehicle.

The network device may communicate with the terminal device, for example, through a Uu interface. For example, the network device may also be referred to as an access network device, an access device, or a radio access network device. The network device can manage a radio resource, provide an access service for the terminal device, and complete data forwarding between the terminal device and a core network. The network device may also be understood as a base station in a network.

For example, the network device in embodiments of this application may be any communication device that has a wireless transceiver function and that is configured to communicate with the terminal device. The network device includes but is not limited to an RSU, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (home evolved NodeB, HeNB, or home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), or the like. Alternatively, the network device may be a gNB or a transmission point (TRP or TP) in a 5G system like an NR system, may be one antenna panel or a group of antenna panels (including a plurality of antenna panels) of a base station in the 5G system, may be a network node, for example, a baseband unit (BBU) or a distributed unit (distributed unit, DU), that constitutes a gNB or a transmission point, or may be a satellite, an uncrewed aerial vehicle, or the like.

In some deployments, a gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at an RRC layer is generated by the CU, and is finally encapsulated at the PHY layer of the DU into information at the PHY layer, or is transformed from the information at the PHY layer. Therefore, in this architecture, higher layer signaling, for example, RRC layer signaling, may also be considered to be sent by the DU, or sent by the DU and the AAU. It may be understood that the network device may be a device including one or more of a CU node, a DU node, and an AAU node. In addition, the CU may be classified as an access network device in an access network (radio access network, RAN), or the CU may be classified as an access network device in a core network (core network, CN). This is not limited in this application.

Optionally, the communication system shown in FIG. 1a to FIG. 1c is applicable to a currently discussed communication network, or applicable to another future network or the like. This is not specifically limited in embodiments of this application.

It should be noted that the solutions in embodiments of this application may also be applied to another communication system, and a corresponding name may also be replaced with a name of a corresponding function in the another communication system.

For ease of understanding embodiments of this application, the following first briefly describes terms in embodiments of this application. It should be understood that these descriptions are merely for ease of understanding embodiments of this application, and should not constitute any limitation on this application.

1. Frequency shift keying (frequency shift keying, FSK) modulation

The FSK modulation is a modulation technology commonly used in wireless communication. A wireless communication system includes a global system for mobile communications (global system for mobile communications, GSM), a Bluetooth (Bluetooth) communication system, and the like. The FSK modulation is usually applied to a communication system with a narrow bandwidth and a low rate. The low rate may be understood as that a communication rate is less than 1 Mbps.

In the FSK modulation technology, a frequency for sending a signal is used to carry an information bit that needs to be transmitted. FIG. 2 is used as an example. An upper part of FIG. 2 shows a waveform of an FSK signal. The waveform is similar to a cosine function, but the FSK signal uses different frequencies. A lower part of FIG. 2 shows a change of an instantaneous frequency of the signal with time. It can be learned that a higher frequency $f_1$ is used for a 1st symbol and a 3rd symbol, and a lower frequency $f_0$ is used for a 2nd symbol.

Assuming that information bits (bits) that need to be transmitted are a bit sequence including 0 and 1, an FSK signal whose sending frequency is $f_0$ represents that a transmitted information bit is '0', and an FSK signal whose sending frequency is $f_1$ represents that a transmitted information bit is '1'. For example, a signal sent on an nth FSK symbol may be represented as:

$$s_n(t) = \cos(2\pi f_n t + \varphi_n), (n-1) * T_{sym} \leq t < n * T_{sym} \qquad \text{Formula (1)}$$

$s_n(t)$ represents the signal sent on the $n^{th}$ FSK symbol, $f_n \in \{f_0, f_1\}$ represents a frequency corresponding to the $n^{th}$ FSK symbol, $T_{sym}$ is duration of the FSK symbol, and $\varphi_n$ is an initial phase of the $n^{th}$ FSK symbol. Each FSK symbol may be a symbol (symbol) in a slot.

In the FSK modulation technology, a modulation order may be increased (in other words, a quantity of candidate frequencies is increased) to increase a transmission rate. An amount of information that can be carried on each FSK symbol is $log_2$ M bits. M represents the modulation order, and also represents the quantity of candidate frequencies.

For example, a modulation order M of 4FSK is 4, representing that one frequency is selected from four candidate frequencies. In this way, each FSK symbol carries $log_2$ 4 = 2 bits.

For another example, a modulation order M of 8FSK is 8, representing that one frequency is selected from eight candidate frequencies. In this way, each FSK symbol carries $log_2$ 8 = 3 bits.

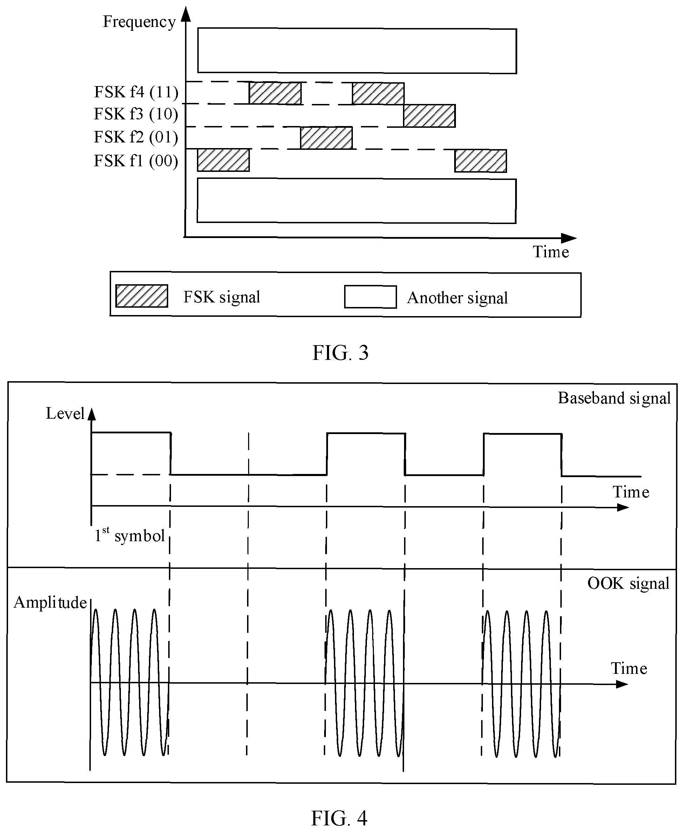

FIG. 3 is a diagram of a waveform of 4FSK. Four candidate frequencies are respectively denoted as $\{f_1, f_2, f_3, f_4\}$. A transmit end device selects one of the four candidate frequencies based on an information bit that needs to be sent, and performs modulation to generate an FSK signal. For example, a to-be-sent bit sequence is 001101111000. Every two information bits are used as a group, and to-be-used frequencies are determined based on an "information bit-frequency" mapping table (as shown in Table 1). Specifically, 1st and 2nd information bits are "00". In this case, it is determined, based on a mapping relationship, that a to-be-used frequency is $f_1$. 3rd and 4th information bits are "11". In this case, it is determined that a to-be-used frequency is $f_4$. The rest may be deduced by analogy, and details are not described again. A mapping relationship between information bits and a frequency is shown in Table 1.

Table 1

| Information bits | Frequency |
|---|---|
| 00 | $f_1$ |
| 01 | $f_2$ |
| 10 | $f_3$ |
| 11 | $f_4$ |

In Table 1, there is a mapping relationship between the information bits 00 and the frequency $f_1$, there is a mapping relationship between the information bits 01 and the frequency $f_2$, there is a mapping relationship between the information bits 10 and the frequency $f_3$, and there is a mapping relationship between the information bits 11 and the frequency $f_4$.

The FSK modulation technology has advantages such as a strong anti-noise capability and a constant envelope. Especially, an FSK receiver has low costs and power consumption. For example, the FSK receiver may use a simple frequency discrimination circuit, to perform detection on a frequency of a received signal to complete demodulation. Such a frequency discrimination circuit usually has very low costs and power consumption, and is suitable for some terminal devices with low-rate services, for example, internet of things (internet of things, IoT) devices.

2. On-off-keying (on-off-keying, OOK) modulation

The OOK modulation is another modulation technology commonly used in wireless communication. In this modulation scheme, information is transmitted depending on whether a signal is sent.

In the OOK modulation scheme, a baseband signal is first generated by using on-off non-return-to-zero line code (ON-OFF non-return-to-zero line code, or ON-OFF NRZ line code) based on information that needs to be modulated. For example, the ON-OFF NRZ line code uses a high level to represent an information bit '1', and the ON-OFF NRZ line code uses a low level to represent an information bit '0', as shown in FIG. 4. A carrier signal is then multiplied by the baseband signal to generate an OOK signal.

Assuming that a frequency of the carrier signal is $f_c$, the carrier signal may be represented as $\cos(2\pi f_c t + \phi_0)$, where $\phi_0$ is an initial phase of the carrier signal. The OOK signal generated through OOK modulation may be represented as:

$$s_{OOK}(t) = s_{nrz}(t)\cos(2\pi f_c t + \phi_0) \qquad \text{Formula (2)}$$

$s_{OOK}(t)$ represents the OOK signal, and $s_{nrz}(t)$ represents the baseband signal OOK signal generated by using the ON-OFF NRZ line code.

It can be learned from FIG. 4 that the OOK modulation may be understood as that the carrier signal is sent when the bit information '1' needs to be sent, and no carrier signal is sent when the bit information '0' needs to be sent.

Correspondingly, on a receive end device side, a receiver of a receive end device needs to determine whether a symbol has energy, to determine whether '0' or '1' is sent, so as to complete demodulation. Specifically, whether energy of a symbol exceeds a threshold (for example, but not limited to 0.5) may be determined. If the energy of the symbol exceeds the threshold, it is determined that a bit information is 1; or if the energy of the symbol does not exceed the threshold, it is determined that a bit information is 0.

It should be understood that a receiver using an OOK demodulation scheme may be referred to as an OOK receiver. A component in the OOK receiver usually has low complexity and low power consumption. Therefore, for some low-cost and low-power-consumption devices such as an internet of things device and a sensor, the OOK modulation scheme and an OOK demodulation scheme may be used, to reduce complexity and power consumption of the devices.

It should be understood that the OOK modulation is one of amplitude shift keying (amplitude shift keying, ASK) modulation technologies. In embodiments of this application, the OOK modulation is used as an example for description. However, it should be understood that the technical solutions of this application are also applicable to ASK modulation.

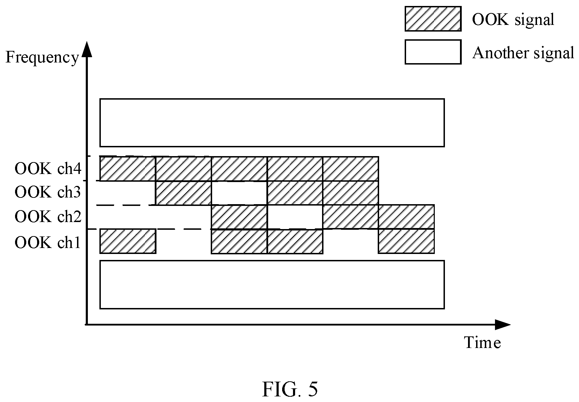

If a transmission rate of the OOK cannot meet a service requirement, a plurality of channels of parallel OOK signals may be transmitted on different frequencies. For example, FIG. 5 shows four channels of OOK signals that are respectively sent on different frequencies. An expression of an $i^{th}$ channel of OOK signal may be written as:

$$s_{OOK,i}(t) = s_{nrz,i}(t) \cos\left(2\pi f_i t + \phi_{0,i}\right) \qquad \text{Formula (3)}$$

$s_{OOK,i}(t)$ represents the $i^{th}$ channel of OOK signal, $s_{nrz,i}(t)$ represents an $i^{th}$ channel of baseband signal generated by using ON-OFF NRZ line code, $f_i$ is a center frequency used by the $i^{th}$ channel of OOK signal, and $\phi_{0,i}$ is an initial phase of an $i^{th}$ channel of carrier signal.

Correspondingly, a receiver may separately filter the four channels of OOK signals to obtain each channel of OOK signal, and then demodulate each channel of OOK signal. Because the four channels of OOK signals are sent in parallel, independent information is sent on each channel, to increase a transmission rate.

It is easy to understand that a quantity of channels of OOK signals may be described as a quantity of channels of OOK signals. For example, four channels of OOK signals may be described as OOK signals transmitted on four channels.

3. Structure of a receiver

Both FSK signals and OOK signals sent on a plurality of channels may be demodulated by using a parallel multi-frequency envelope detection (envelope-demodulation, ED) receiver.

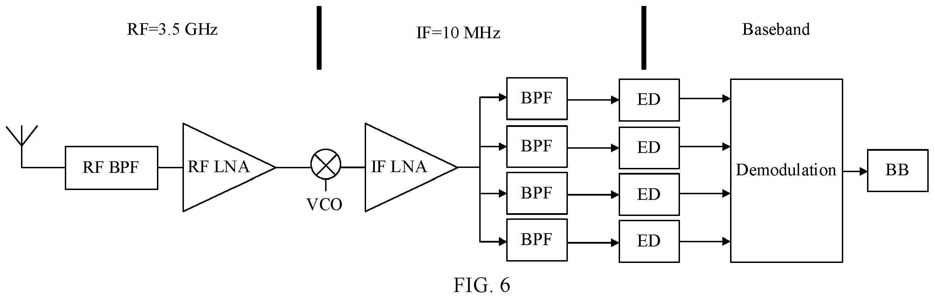

FIG. 6 shows a structure of a commonly used parallel multi-frequency envelope detection receiver. It is assumed that an OOK signal is sent on a carrier frequency $f_{RF}$ of 3.5 GHz. In the receiver of a receive end device, radio frequency filtering is first performed by using a radio frequency band-pass filter (radio frequency band-pass filter, RF BPF) to suppress an out-of-band signal, and a radio frequency amplifier, for example, a radio frequency low noise amplifier (radio frequency low noise amplifier, RF LNA), is used to amplify a filtered signal. Then, a local oscillator signal is generated by using a local oscillator (local oscillator), for example, a voltage controlled oscillator (voltage controlled oscillator, VCO), and frequency mixing is performed on the local oscillator signal and an amplified radio frequency signal, so that a frequency of the amplified radio frequency signal is migrated to an intermediate frequency (intermediate frequency, IF). For example, the intermediate frequency $f_{IF}$ is 10 MHz. The receiver processes a migrated signal on the intermediate frequency, for example, amplifies the migrated signal by using an intermediate frequency low noise amplifier (intermediate frequency low noise amplifier, IF LNA), and performs band-pass filtering on an amplified signal by using BPFs, to obtain intermediate frequency FSK signals or intermediate frequency OOK signals. The band-pass filtering on the intermediate frequency, namely, filtering performed by each BPF, is band-pass filtering performed for a specific frequency range, to filter out a signal that falls within a band-pass range corresponding to the BPF.

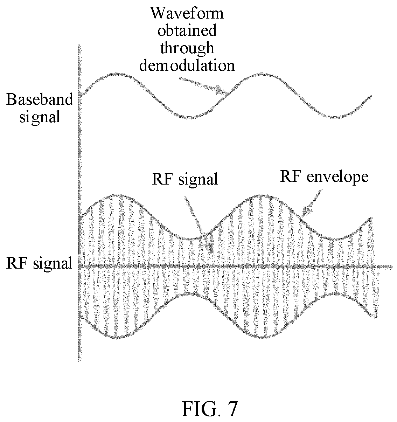

Finally, the receiver performs envelope detection by using envelope detectors, to obtain envelope waveforms of the signals, and then performs demodulation based on amplitudes of the envelope waveforms. For example, FIG. 7 is a diagram of envelope detection. After envelope detection is performed, an envelope waveform shown in an upper part of FIG. 7 may be obtained.

It is easy to understand that a receiver that down-converts a radio frequency signal to the intermediate frequency may also be referred to as a superheterodyne receiver, and is a receiver commonly used in wireless communication. One of reasons that the receiver performs down-conversion is that the receiver needs to perform filtering processing, in other words, filter out a signal on a channel other than a target channel, to obtain a signal on the target channel. However, it is difficult for the filter to implement filtering processing in a radio frequency band, and it is easy to implement filtering processing on the intermediate frequency.

4. Frequency offset problem

A frequency offset is a deviation between a frequency of a local oscillator signal generated by a receive end device and an ideal frequency.

For example, the receive end device expects to generate a local oscillator signal whose frequency is k. Correspondingly, the ideal frequency is k. Due to impact of some factors, for example, poor stability of a local oscillator of the receive end device, a frequency of a local oscillator signal actually generated by the receive end device is k1. Correspondingly, the frequency offset is a difference between k1 and k.

For example, in the structure of the receiver shown in FIG. 6, the local oscillator is used to down-convert the radio frequency signal to the intermediate frequency. For some receive end devices, local oscillators with poor stability are used in consideration of costs or power consumption. In this case, there is a deviation between an actual frequency of a local oscillator signal generated by the local oscillator and an ideal frequency, that is, a frequency offset is generated, and even the frequency offset is very large. In a process of performing down-conversion by using a local oscillator signal with a large frequency offset, a waveform on a target channel cannot be accurately converted to a passband range of a filter. Consequently, a signal energy loss is caused. In addition, a signal on an adjacent channel may be converted to the passband range of the filter. Consequently, mutual interference between a plurality of channels of signals is caused, severely affecting demodulation performance.

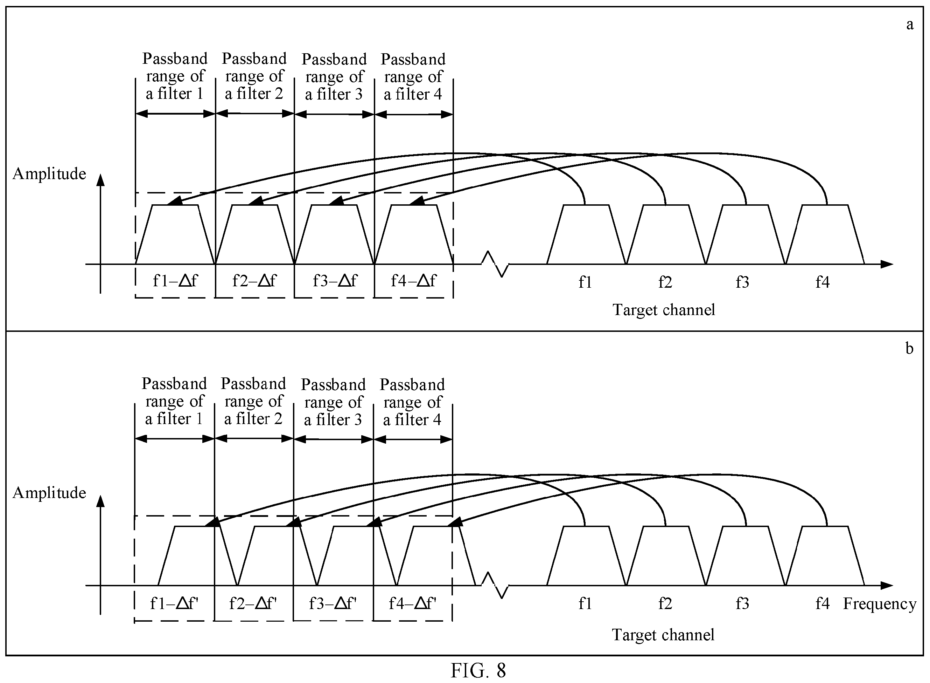

FIG. 8 is used as an example. It is assumed that frequencies used by 4FSK or four channels of parallel OOK signals are respectively denoted as $\{f_1, f_2, f_3, f_4\}$.

In FIG. 8, a block in which a letter a is located is used as an example. A frequency offset generated by a local oscillator is very small. After down-conversion, signal spectrums of the four channels are respectively and accurately migrated to preset intermediate frequencies, for example, passband ranges of four parallel filters in FIG. 8. After filtering, each filter retains a signal on a corresponding channel, and a signal on an adjacent channel is filtered out. Specifically, a channel corresponding to the frequency $f_2$ in FIG. 8 is used as a target channel. For the target channel, a channel corresponding to the frequency $f_1$ and a channel corresponding to the frequency $f_3$ are adjacent channels. A signal spectrum of the target channel is migrated to a passband range of a filter 2, and a signal on the adjacent channel is not migrated to the passband range of the filter 2, in other words, is filtered out by the filter 2.

Similarly, the channel corresponding to the frequency $f_1$ may alternatively be used as the target channel. In this case, for the target channel, the channel corresponding to the frequency $f_2$ is an adjacent channel. Correspondingly, a signal spectrum of the target channel is migrated to a passband range of a filter 1, and a signal on the adjacent channel is filtered out by the filter 1. A channel corresponding to another frequency (for example, the frequency $f_3$ or the frequency $f_4$) may be deduced by analogy, and details are not described again.

In FIG. 8, a block in which a letter b is located is used as an example. A frequency offset generated by a local oscillator is very large. After down-conversion, signal spectrums of the channels cannot be accurately migrated to preset intermediate frequencies. A channel corresponding to the frequency $f_2$ in FIG. 8 is still used as a target channel. For the target channel, a major part of a signal spectrum of the target channel is migrated to a passband range of a filter 2, and the remaining part of the signal spectrum of the target channel is migrated to a passband range of a filter 3. For a receive end device, it is expected that a signal on the target channel (namely, a signal on the channel corresponding to the frequency $f_2$) is obtained within the passband range of the filter 2. In this way, for the signal on the target channel, a signal that is migrated to the passband range of the filter 2 may be considered as a valid signal, and a signal that is migrated to the passband range of the filter 3 is considered as an invalid signal. In other words, the signal on the target channel has an energy loss. In addition, a part of a signal on a channel corresponding to the frequency $f_1$ is also migrated to the passband range of the filter 2. However, the receive end device expects to obtain the signal on the target channel (namely, the signal on the channel corresponding to the frequency $f_2$) within the passband range of the filter 2, instead of obtaining the signal on the channel corresponding to the frequency $f_1$. The part of the signal is considered as an interference signal, affecting demodulation performance.

Similarly, a channel corresponding to another frequency (for example, the frequency $f_1$, the frequency $f_3$, or the frequency $f_4$) may be deduced by analogy, and details are not described again.

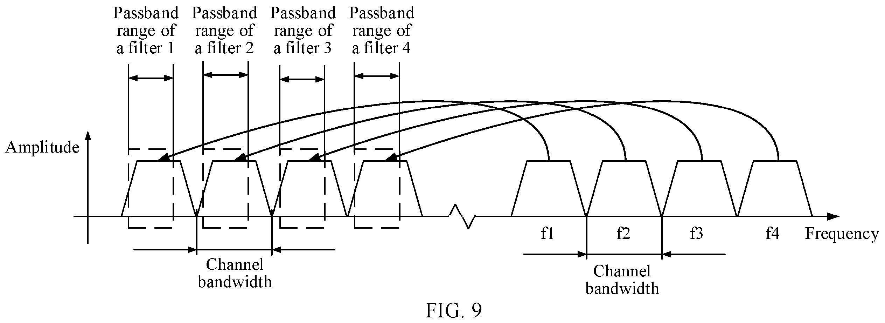

The following describes a processing manner in a related technology. A transmit end device increases a bandwidth for sending a signal, so that a channel bandwidth of each channel of signal is out of a passband range of a filter of a receive end device. As shown in FIG. 9, a channel bandwidth corresponding to a frequency $f_2$ is out of a passband range of a filter 2. In this way, even if a local oscillator has a specific frequency offset, a filter of each channel can still filter out a signal on a corresponding channel, and no interference of a signal on an adjacent channel is introduced.

However, in the processing manner in the related technology, because the signal bandwidth is greater than a filter bandwidth, a signal sent in a part of a frequency band is not received and used by the receive end device. Consequently, a great waste of spectrum resources and power resources is caused.

The channel corresponding to the frequency $f_2$ in FIG. 9 is still used as an example. A major part of a signal spectrum of the channel is migrated to the passband range of the filter 2, and the remaining part of the signal spectrum is migrated to be out of the passband range of the filter 2, and is not used by the receive end device. Consequently, spectrum resources and power resources are wasted. Similarly, a channel corresponding to another frequency (for example, a frequency $f_1$, a frequency $f_3$, or a frequency $f_4$) also has a similar problem, and details are not described again.

In conclusion, when there is the deviation between the frequency of the local oscillator signal generated by the receive end device and the ideal frequency, a signal on the target channel cannot be accurately down-converted to the passband range of the filter. Consequently, a signal energy loss is caused, and mutual interference between signals on adjacent channels may also be caused, severely affecting demodulation performance.

In view of this, embodiments of this application provide a frequency offset correction method. The method may be applied to the communication system shown in FIG. 1a, FIG. 1b, or FIG. 1c. In the frequency offset correction method provided in embodiments of this application, a second device performs down-conversion by using a first local oscillator signal, to receive a first reference signal (reference signal) from a first device. The second device adjusts the first local oscillator signal based on a receiving result of the first reference signal, to obtain a second local oscillator signal. A frequency offset of the second local oscillator signal is less than a frequency offset of the first local oscillator signal. The second device performs down-conversion by using the second local oscillator signal, to receive a first data signal from the first device. A guard band (guard band) of the first reference signal is greater than a guard band of the first data signal. In other words, the second device performs frequency offset correction based on the receiving result of the first reference signal, so that the frequency offset of the second local oscillator signal is less than the frequency offset of the first local oscillator signal, to achieve effect of decreasing a residual frequency offset of the local oscillator signal. When performing down-conversion by using the second local oscillator signal, the second device can accurately perform spectrum migration, for example, accurately migrate a spectrum of the first data signal to an expected frequency range (for example, a band-pass range that is set by a filter of a receiver), to reduce a signal energy loss. This also helps reduce interference caused by a signal on an adjacent channel and improve demodulation performance.

It should be understood that names of messages between devices, names of parameters in the messages, or the like in the following embodiments of this application are merely examples, and may be other names in specific implementation. This is not specifically limited in embodiments of this application.

In embodiments of this application, the first device serves as a device for sending a signal (for example, the following first reference signal or first data signal). The first device may also have other descriptions, for example, a transmit device, a transmit end device, a transmit apparatus, and a transmit end apparatus. In embodiments of this application, the first device is used as an example for description. Similarly, the second device serves as a device for receiving a signal (for example, the following first reference signal or first data signal). The second device may also have other descriptions, for example, a receive device, a receive end device, a receive apparatus, and a receive end apparatus. In embodiments of this application, the second device is used as an example for description. A unified description is provided herein and details are not described below again.

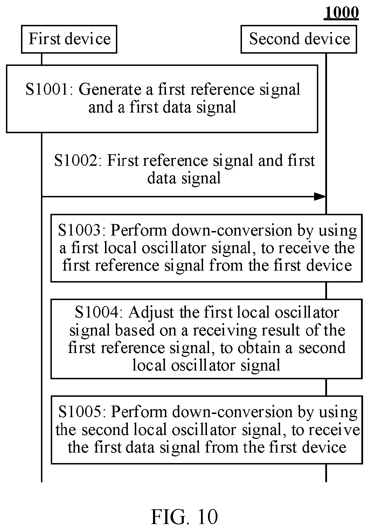

The following describes in detail the frequency offset correction method provided in embodiments of this application with reference to FIG. 10 to FIG. 20. The frequency offset correction method 1000 provided in embodiments of this application includes the following steps.

S1001: A first device generates a first reference signal and a first data signal.

For example, the first device is described as follows: In an example of downlink transmission, the first device may be a network device. In an example of sidelink transmission, the first device may be a terminal device.

For example, when the frequency offset correction method 1000 in embodiments of this application is applied to an NR system, the first data signal may be a low-power wake-up signal (low-power wake-up signal, LP-WUS), and the first reference signal may be a channel state information-reference signal (channel state information-reference signal, CSI-RS). Certainly, the NR system may also transmit another signal, for example, a legacy NR signal (legacy NR signal). This is not limited in embodiments of this application.

Optionally, for the first reference signal and the first data signal, modulation schemes of the two signals are described by using four examples (the following Example 1 to Example 4).

Example 1: A modulation scheme of the first reference signal is OOK, and a modulation scheme of the first data signal is FSK.

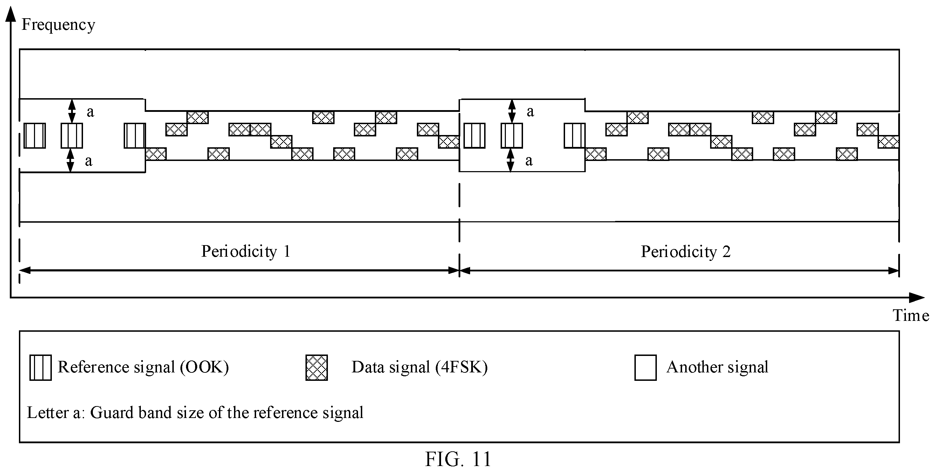

FIG. 11 is used as an example. The first reference signal is a reference signal generated by using the OOK modulation scheme, and the first data signal is a data signal generated by using a 4FSK modulation scheme.

Example 2: A modulation scheme of the first reference signal is FSK, and a modulation scheme of the first data signal is FSK.

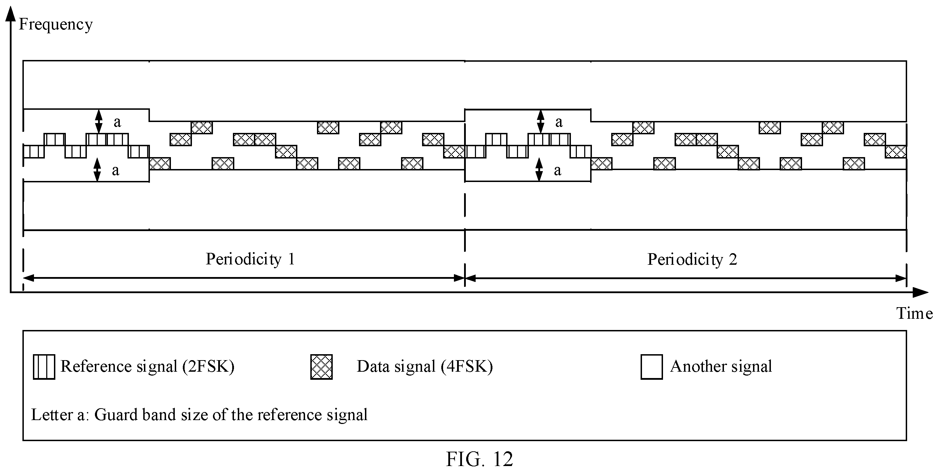

FIG. 12 is used as an example. The first reference signal is a reference signal generated by using a 2FSK modulation scheme, and the first data signal is a data signal generated by using a 4FSK modulation scheme.

In Example 2, in a first possible implementation, a modulation order of the first reference signal is lower than a modulation order of the first data signal.

FIG. 12 is used as an example. The modulation scheme of the first reference signal is 2FSK, and the modulation order is 2. The modulation scheme of the first data signal is 4FSK, and the modulation order is 4. In this way, a bandwidth occupied by the first reference signal is less than a bandwidth occupied by the first data signal. When the second device performs frequency offset adjustment based on a receiving result of the first reference signal, it is more convenient for the second device to compare detection results (for example, the following first energy detection result and second energy detection result) of two filters, an estimated frequency offset direction is more accurate, and better frequency offset correction performance can be implemented.

In Example 2, in a second possible implementation, a modulation order of the first reference signal is the same as a modulation order of the first data signal, there is a mapping relationship between an information bit transmitted by using the first reference signal and a first frequency, the first frequency is a part of M candidate frequencies, the first frequency is used to demodulate the first reference signal to obtain the information bit, and M is the modulation order of the first reference signal.

For example, the modulation scheme of the first reference signal and the modulation scheme of the first data signal are 4FSK, and the modulation order of the first reference signal and the modulation order of the first data signal are 4. Table 1 is used as an example. Four candidate frequencies corresponding to the first reference signal and the first data signal are $\{f_1, f_2, f_3, f_4\}$, and the four candidate frequencies $\{f_1, f_2, f_3, f_4\}$ increase in sequence. Information bits transmitted by using the first data signal include 00, 01, 10, and 11. Correspondingly, carrier frequencies corresponding to the first data signal include $\{f_1, f_2, f_3, f_4\}$. However, information bits transmitted by using the first reference signal include 01 and 10, and do not include 00 or 11. With reference to Table 1, a frequency to which the information bits 01 are mapped is $f_2$, and a frequency to which the information bits 10 are mapped is $f_3$. In other words, the first frequency includes the frequency $f_2$ and the frequency $f_3$ . In other words, carrier frequencies corresponding to the first reference signal include $\{f_2, f_3\}$. In this way, a bandwidth occupied by the first reference signal is less than a bandwidth occupied by the first data signal. When the second device performs frequency offset adjustment based on a receiving result of the first reference signal, better frequency offset correction performance can be implemented. For details, refer to the descriptions of the first possible implementation in Example 2. Details are not described herein again.

Example 3: A modulation scheme of the first reference signal is OOK, and a modulation scheme of the first data signal is OOK.

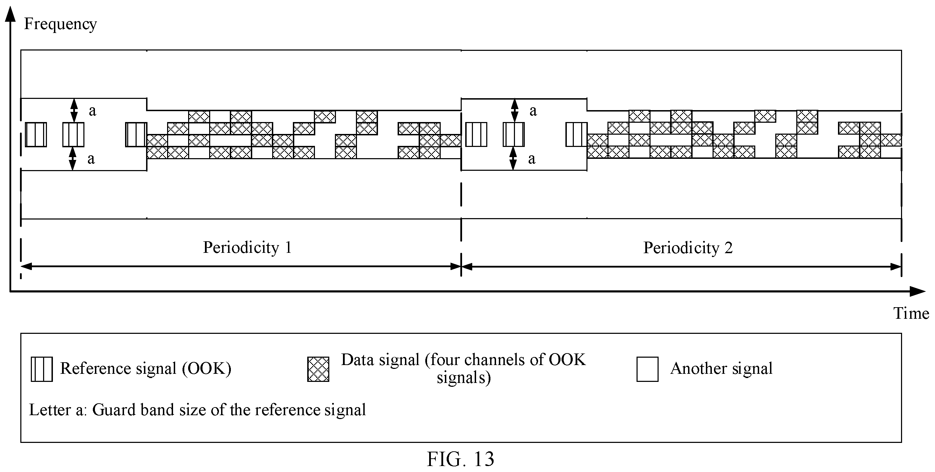

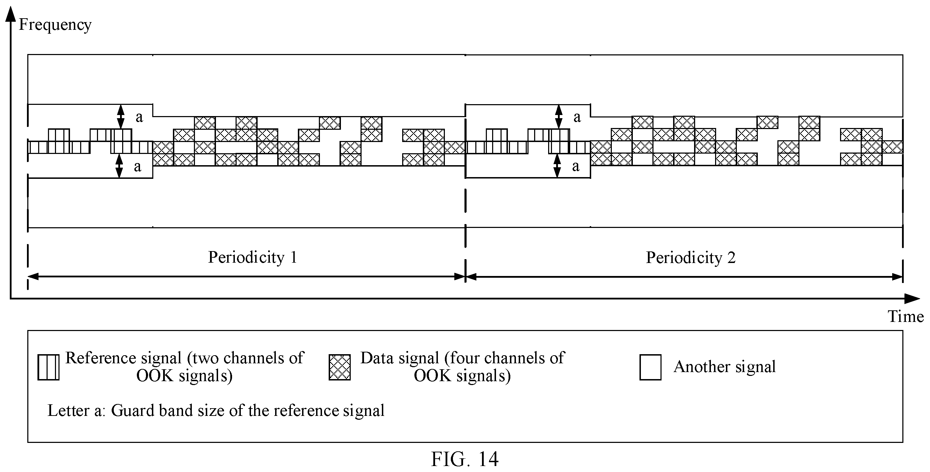

FIG. 13 (or FIG. 14) is used as an example. The first reference signal is a reference signal generated by using the OOK modulation scheme, and the first data signal is a data signal generated by using the OOK modulation scheme.

Example 4: A modulation scheme of the first reference signal is FSK, and a modulation scheme of the first data signal is OOK.

It is easy to understand that, in Example 1 and Example 3, when the modulation scheme of the first reference signal is OOK, in a possible implementation, a quantity of channels for the first reference signal is less than a quantity of channels for the first data signal.

FIG. 14 is used as an example. The quantity of channels occupied by the first reference signal is 2, and the quantity of channels occupied by the first data signal is 4. In other words, when each channel bandwidth of the first reference signal is the same as each channel bandwidth of the first data signal, the quantity of channels for the first reference signal is less than the quantity of channels for the first data signal. In this way, a bandwidth occupied by the first reference signal is less than a bandwidth occupied by the first data signal. When the second device performs frequency offset adjustment based on a receiving result of the first reference signal, better frequency offset correction performance can be implemented. For details, refer to the descriptions of the first possible implementation in Example 2. Details are not described herein again.

It is easy to understand that, when the demodulation scheme of the first reference signal is OOK or FSK, in a possible implementation, values of different elements in a bit sequence transmitted by using the first reference signal are the same, and in duration of the first reference signal, a frequency location and a bandwidth that are occupied by the first reference signal are fixed.

For example, the OOK modulation scheme is used as an example. The bit sequence transmitted by using the first reference signal is 1111. Each element in the bit sequence is 1. In other words, the first device continuously sends "ON ON ON ON" signals by using a same frequency. In this way, in the duration of the first reference signal, the frequency location and the bandwidth that are occupied by the first reference signal are fixed.

For another example, the FSK modulation scheme is used as an example. The bit sequence transmitted by using the first reference signal is 01010101. Each element in the bit sequence is 01. Table 1 is used as an example. Each element '01' corresponds to the information bits '01' in Table 1, and the first device continuously sends FSK signals on the frequency $f_2$. In this way, in the duration of the first reference signal, the frequency location and the bandwidth that are occupied by the first reference signal are also fixed.

Because the frequency location and the bandwidth that are occupied by the first reference signal are fixed, the bandwidth occupied by the first reference signal is less than the bandwidth occupied by the first data signal. When the second device performs frequency offset adjustment based on the receiving result of the first reference signal, better frequency offset correction performance can be implemented. For details, refer to the descriptions of the first possible implementation in Example 2. Details are not described herein again.

For the first device, after generating the first reference signal and the first data signal, the first device performs S1002.

S1002: The first device sends the first reference signal and the first data signal to the second device. Correspondingly, the second device receives the first reference signal and the first data signal from the first device.

For example, the second device is described as follows: Downlink transmission is used as an example. When the first device is a network device, the second device is a terminal device. Sidelink transmission is used as an example. The second device is also a terminal device.

For example, guard bands of signals (namely, the first reference signal and the first data signal) are described as follows: A guard band of the first reference signal is greater than a guard band of the first data signal. The guard band is a bandwidth not used to send a signal, to avoid mutual interference with a signal on an adjacent frequency.

The guard band of the first reference signal is used to avoid interference between the first reference signal and another transmitted signal in a blank area in FIG. 11. The guard band of the first reference signal may be denoted as a, for example, a frequency part identified by a letter a in FIG. 11.

The guard band of the first data signal is used to avoid interference between the first data signal and another transmitted signal in the blank area in FIG. 11. The guard band of the first data signal may be denoted as b, and b<a. In FIG. 11, b=0, in other words, the guard band of the first data signal is 0.

Similarly, for a guard band of a signal in FIG. 12, FIG. 13, or FIG. 14, refer to the descriptions in FIG. 11. Details are not described herein again.

In this way, when the second device performs frequency offset correction based on the first reference signal, because the guard band of the first reference signal is greater than the guard band of the first data signal, and no signal is sent in the guard band, even if a large frequency offset occurs on the second device, for example, a frequency offset of a first local oscillator signal is large, the second device can implement good frequency offset correction performance. Specifically, when the second device performs down-conversion by using the first local oscillator signal, a spectrum of the first reference signal is migrated. Even if the first reference signal does not accurately fall within an expected frequency range, no other interference signal falls within the expected frequency range. In other words, the second device receives no interference signal, so that it is more convenient for the second device to compare the detection results (for example, the following first energy detection result and second energy detection result) of the two filters, the estimated frequency offset direction is more accurate, and the frequency offset correction performance is improved.

It is easy to understand that, in embodiments of this application, the guard band of the first reference signal may alternatively be equal to the guard band of the first data signal. This is not shown in FIG. 11 (or FIG. 12, FIG. 13, or FIG. 14). This is not limited in embodiments of this application.

It is easy to understand that the guard band of the first reference signal is related to a frequency offset range of the second device. For example, when the frequency offset range of the second device is large, the guard band of the first reference signal is correspondingly large. On the contrary, when the frequency offset range of the second device is small, the guard band of the first reference signal is correspondingly small. In a possible implementation, the first device may learn of the frequency offset range of the second device in advance, and then set the guard band of the first reference signal based on the frequency offset range of the second device. Alternatively, in another possible implementation, the second device determines the guard band of the first reference signal based on the frequency offset range of the second device, and then sends indication information to the second device, to indicate the guard band of the first reference signal. This is not limited in embodiments of this application.

For example, bandwidths occupied by signals (namely, the first reference signal and the first data signal) are described as follows: The bandwidth occupied by the first reference signal is less than the bandwidth occupied by the first data signal.

FIG. 11 is used as an example. In FIG. 11, $B_{data} = 4 \cdot B_{fsk}$. $B_{data}$ represents the bandwidth occupied by the first data signal, and $B_{fsk}$ represents a bandwidth occupied by each FSK candidate frequency in the first data signal.

In FIG. 11, $B_{rs} = 2 \cdot B_{fsk}$. $B_{rs}$ represents the bandwidth occupied by the first reference signal, and $B_{fsk}$ represents the bandwidth occupied by each FSK candidate frequency in the first data signal. In other words, $B_{rs} < B_{data}$.

Similarly, in FIG. 12, $B_{data} = 4 \cdot B_{fsk}$, $B_{rs} = 2 \cdot B_{fsk}$, and $B_{rs} < B_{data}$. For details, refer to the descriptions in FIG. 11. Details are not described herein again.

In FIG. 13 or FIG. 14, $B_{data} = 4 \cdot B_{ook}$, $B_{rs} = 2 \cdot B_{ook}$, and $B_{rs} < B_{data}$. $B_{ook}$ represents a bandwidth occupied by each OOK channel in the first data signal.

In this way, when the second device performs frequency offset adjustment based on the receiving result of the first reference signal, better frequency offset correction performance can be implemented. For details, refer to the descriptions of the first possible implementation in Example 2 of S1001. Details are not described herein again.

It is easy to understand that, in embodiments of this application, the bandwidth occupied by the first reference signal may alternatively be equal to the bandwidth occupied by the first data signal, that is, $B_{rs} = B_{data}$. This is not shown in FIG. 11 (or FIG. 12, FIG. 13, or FIG. 14). This is not limited in embodiments of this application.

For example, center frequencies of signals (namely, the first reference signal and the first data signal) are described as follows: The center frequency of the first reference signal is the same as the center frequency of the first data signal.

In this way, when the second device performs frequency offset correction based on the first reference signal, better frequency offset correction performance can be implemented. For details, refer to the descriptions of the first possible implementation in Example 2 of S1001. Details are not described herein again.

It is easy to understand that, in embodiments of this application, the center frequency of the first reference signal may alternatively be different from the center frequency of the first data signal. For example, there is a specific frequency difference between the center frequency of the first reference signal and the center frequency of the first data signal. This is not shown in FIG. 11 (or FIG. 12, FIG. 13, or FIG. 14). This is not limited in embodiments of this application.

For the second device, that the second device receives the first reference signal from the first device is specifically implemented by performing S1003. S1003 is described as follows:

S1003: The second device performs down-conversion by using the first local oscillator signal, to receive the first reference signal from the first device.

For example, the second device includes a receiver. The receiver of the second device is shown in FIG. 6. The first local oscillator signal is a local oscillator signal generated by a VCO in the receiver.

For example, the down-conversion in S1003 may be understood as that the second device performs frequency mixing on the first local oscillator signal generated by the VCO and a signal (the signal includes the first reference signal) obtained through processing of an RF LNA, to implement spectrum migration. In other words, a spectrum of the signal obtained through processing of the RF LNA is migrated to an intermediate frequency, to receive the first reference signal.

S1004: The second device adjusts the first local oscillator signal based on the receiving result of the first reference signal, to obtain a second local oscillator signal.

A frequency offset of the second local oscillator signal is less than the frequency offset of the first local oscillator signal.

For example, the second device expects to generate an ideal local oscillator signal whose frequency is k. Correspondingly, an ideal frequency is k. Due to impact of some factors, for example, poor stability of a local oscillator of the second device, a frequency of a first local oscillator signal actually generated by the second device is k1. Correspondingly, the frequency offset of the first local oscillator signal is a difference between k1 and k.

After performing frequency offset correction, the second device obtains the second local oscillator signal. A frequency of the second local oscillator signal is k2. Correspondingly, the frequency offset of the second local oscillator signal is a difference between k2 and k. In embodiments of this application, |k1-k|>|k2-k|, in other words, an absolute value between k1 and k is greater than an absolute value between k2 and k.

For example, an implementation process of S1004 is described as follows:
The receiving result of the first reference signal includes the first energy detection result and the second energy detection result. The first energy detection result is obtained by performing filtering processing on the first reference signal by a first filter. The second energy detection result is obtained by performing filtering processing on the first reference signal by a second filter. A passband frequency of the first filter is less than a passband frequency of the second filter.

When a frequency offset is negative, the first energy detection result is less than the second energy detection result. The second device increases the frequency of the local oscillator signal. In this way, the frequency of the second local oscillator signal determined by the second device is greater than the frequency of the first local oscillator signal.

When a frequency offset is positive, the first energy detection result is greater than the second energy detection result. The second device decreases the frequency of the local oscillator signal. In this way, the frequency of the second local oscillator signal determined by the second device is less than the frequency of the first local oscillator signal.

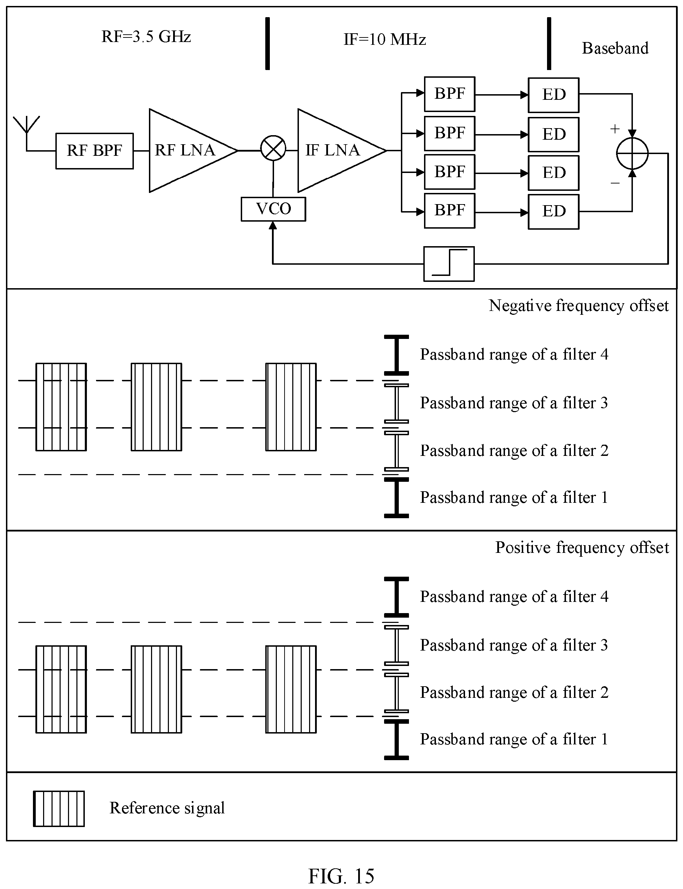

FIG. 15 is used as an example. The first filter may be a filter 1, and the passband frequency is denoted as $f_1$. The second filter may be a filter 4, and the passband frequency is denoted as $f_4$. The second device compares energy detection results of the two filters by using a comparison circuit, to determine a frequency offset direction (in other words, determine whether the frequency offset is negative or positive), and further adjust the frequency of the local oscillator signal.

A processing process in which the frequency offset direction is negative (in other words, the frequency offset is negative) is described as follows: In FIG. 15, the filter 1 is configured to filter the first reference signal. However, there is a negative frequency offset, the bandwidth of the first reference signal does not pass through the filter 1, and mainly noise and an interference signal pass through the filter 1. Therefore, after envelope detection, the filter 1 outputs a low level, in other words, the first energy detection result is small. The filter 4 is also configured to filter the first reference signal. However, there is a negative frequency offset, and a part of the first reference signal passes through the filter 4. Therefore, after envelope detection, the filter 4 outputs a level of a specific amplitude. To be specific, in a normal case, a signal energy detection result (namely, the second energy detection result) output by the filter 4 is greater than a signal energy detection result (namely, the first energy detection result) output by the filter 1. In other words, the second energy detection result is greater than the first energy detection result.

Then, the second device compares the level of the filter 1 with the level of the filter 4 by using the comparison circuit, determines that the current frequency offset is negative, and further adjusts a frequency of the local oscillator, so that a frequency of an intermediate frequency signal is increased. After the adjustment is completed, the foregoing steps may be continued, in other words, the frequency of the local oscillator is adjusted again. This process is repeated until the level of the filter 1 is close to the level of the filter 4. In this case, an intermediate frequency signal output by the local oscillator may be described as the second local oscillator signal. Correspondingly, before the frequency of the local oscillator is cyclically adjusted, an intermediate frequency signal output by the local oscillator may be described as the first local oscillator signal. The frequency offset of the second local oscillator signal remains at a low level, in other words, the frequency offset of the second local oscillator signal is less than the frequency offset of the first local oscillator signal.

A processing process in which the frequency offset direction is positive (in other words, the frequency offset is positive) is described as follows: In FIG. 15, the filter 4 is configured to filter the first reference signal. However, there is a positive frequency offset, the bandwidth of the first reference signal does not pass through the filter 4, and mainly noise and an interference signal pass through the filter 4. Therefore, after envelope detection, the filter 4 outputs a low level, in other words, the second energy detection result is small. The filter 1 is also configured to filter the first reference signal. However, there is a positive frequency offset, and a part of the first reference signal passes through the filter 1. Therefore, after envelope detection, the filter 1 outputs a level of a specific amplitude. To be specific, in a normal case, a signal energy detection result (namely, the first energy detection result) output by the filter 1 is greater than a signal energy detection result (namely, the second energy detection result) output by the filter 4. In other words, the first energy detection result is greater than the second energy detection result.

Then, the second device compares the level of the filter 1 with the level of the filter 4 by using the comparison circuit, determines that the current frequency offset is positive, and further adjusts a frequency of the local oscillator, so that a frequency of an intermediate frequency signal is decreased. After the adjustment is completed, the foregoing steps may be continued, in other words, the frequency of the local oscillator is adjusted again. This process is repeated until the level of the filter 1 is close to the level of the filter 4. In this case, an intermediate frequency signal output by the local oscillator may be described as the second local oscillator signal. Correspondingly, before the frequency of the local oscillator is cyclically adjusted, an intermediate frequency signal output by the local oscillator may be described as the first local oscillator signal. The frequency offset of the second local oscillator signal remains at a low level, in other words, the frequency offset of the second local oscillator signal is less than the frequency offset of the first local oscillator signal.

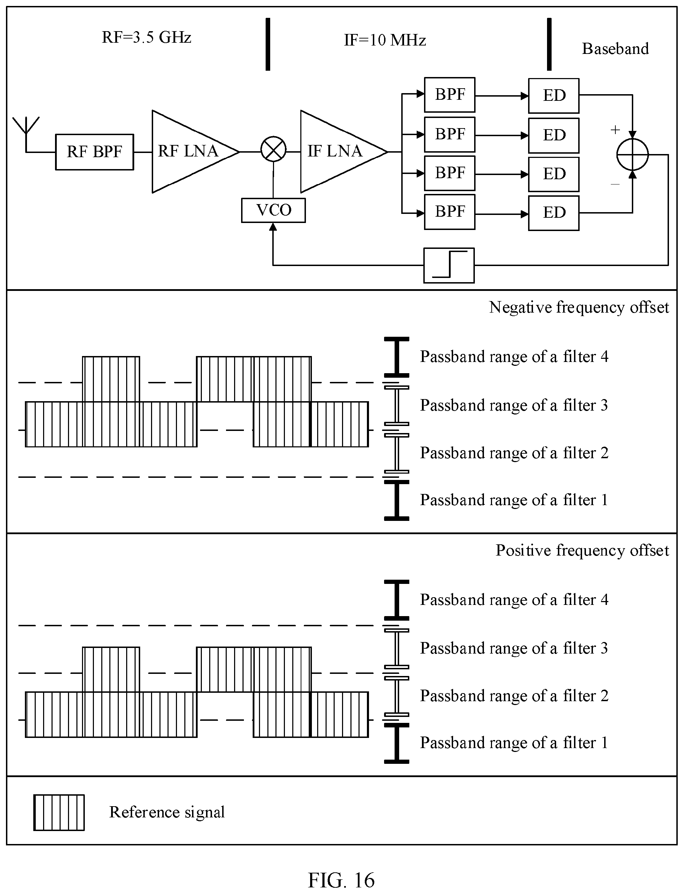

It should be noted that the quantity of channels for the first reference signal may be 1. Correspondingly, the receiving result of the first reference signal is shown in FIG. 15. The quantity of channels for the first reference signal may alternatively be 2 or more. For example, the quantity of channels for the first reference signal is 2. The receiving result of the first reference signal is shown in FIG. 16.

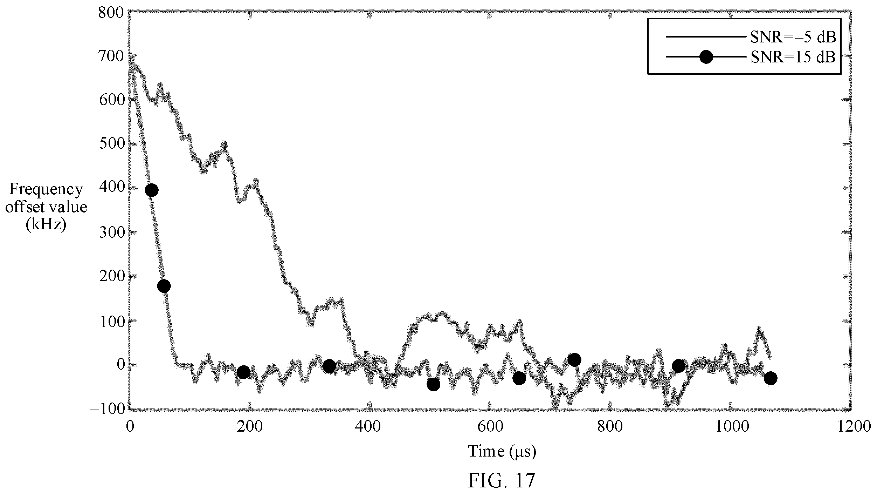

FIG. 17 shows frequency offset correction effects that can be achieved according to the frequency offset correction method according to embodiments of this application. In FIG. 17, a vertical axis indicates a frequency offset value, and a horizontal axis indicates time. 0 μs may be understood as a moment at which the second device starts to perform frequency offset correction. It can be learned from FIG. 17 that, as time goes by, after a plurality of cyclic iterations, a residual frequency offset of a local oscillator signal gradually decreases from 700 kHz to less than 100 kHz, so that a low frequency offset correction effect is achieved.

It should be noted that FIG. 17 shows frequency offset correction effects corresponding to first reference signals transmitted in two channel environments. A signal-to-noise ratio (signal-noise ratio, SNR) corresponding to a channel environment 1 is -5 dB. The second device receives a first reference signal transmitted in the channel environment 1, and performs frequency offset correction based on the first reference signal in the channel environment 1. In this case, a frequency offset correction effect is shown by a broken line not identified by circles in FIG. 17. An SNR corresponding to a channel environment 2 is 15 dB. The second device receives a first reference signal transmitted in the channel environment 2, and performs frequency offset correction based on the first reference signal in the channel environment 2. In this case, a frequency offset correction effect is shown by a broken line identified by circles in FIG. 17.

It is easy to understand that, when the first device sends the first reference signal, the second device may adjust the local oscillator through a plurality of cyclic iterations in the duration of the first reference signal, to correct the frequency offset back to a low level. In this way, when the first reference signal is received and the first data signal starts to be received, the residual frequency offset of the receiver on a second device side is already at a very low level, and the guard band of the first data signal may be very small (for example, the guard band of the first data signal is less than the guard band of the first reference signal), or even the guard band of the first data signal is 0, so that demodulation performance does not deteriorate, and power resources and spectrum resources can be saved.

For the second device, after obtaining the second local oscillator signal, the second device performs S1005.

S1005: The second device performs down-conversion by using the second local oscillator signal, to receive the first data signal from the first device.

For example, the down-conversion in S1005 may be understood as that the second device performs frequency mixing on the second local oscillator signal generated by the VCO and a signal (the signal includes the first data signal) obtained through processing of the RF LNA, to implement spectrum migration. In other words, a spectrum of the signal obtained through processing of the RF LNA is migrated to the intermediate frequency, to receive the first data signal.

It is easy to understand that, in comparison with a processing manner in a related technology (as shown in FIG. 9, the bandwidth for sending the signal is increased, so that the bandwidth of each channel of signal is out of the bandwidth of the filter of the receive end device), a signal bandwidth (for example, the bandwidth occupied by the first reference signal or the bandwidth occupied by the first data signal) in embodiments of this application does not need to be additionally increased, the signal bandwidth is basically the same as a total bandwidth of a filter (for example, a total bandwidth corresponding to the filter 1 to the filter 4 in FIG. 15 or FIG. 16), and there are no additional power resource overheads or spectrum resource overheads.

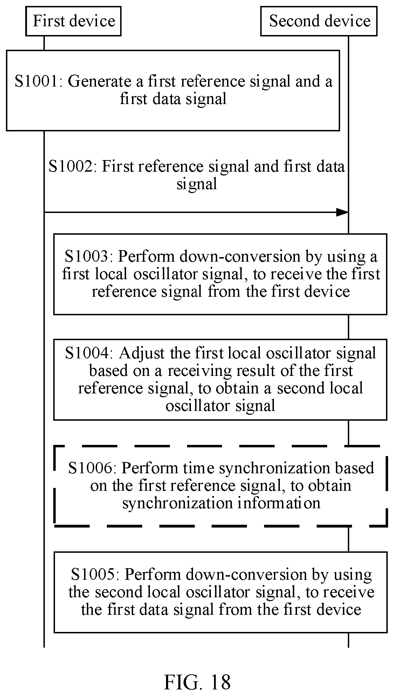

In some embodiments, the first reference signal can be further used for synchronization. Specifically, as shown in FIG. 18, the frequency offset correction method 1000 in embodiments of this application further includes the following steps.

S1006: The second device performs time synchronization based on the first reference signal, to obtain synchronization information.

The synchronization information indicates a time domain location of the first data signal.

For example, FIG. 11 (or FIG. 12, FIG. 13, or FIG. 14) is used as an example. An end boundary of the first reference signal is the same as a start boundary of the first data signal. In other words, a last time unit (for example, a symbol) occupied by the first reference signal in time domain is denoted as a time unit 1. A next time unit of the time unit 1 is a start time unit occupied by the first data signal in time domain.

In this way, after performing time synchronization based on the first reference signal, the second device may determine a time unit in which the first data signal starts to be transmitted, to listen to the first data signal in the corresponding time unit. Compared with a case in which the second device continuously listens to the data signal, that the second device listens to the first data signal based on the synchronization information helps reduce power consumption overheads of continuously listening to the data signal.

It is easy to understand that an execution sequence between S1006 and another step is as follows: The second device performs S1006 after S1003 and before S1005, as shown in FIG. 18. The second device may first perform S1004 and then perform S1006, as shown in FIG. 18, first perform S1006 and then perform S1004, or simultaneously perform S1004 and S1006. This is not limited in embodiments of this application.

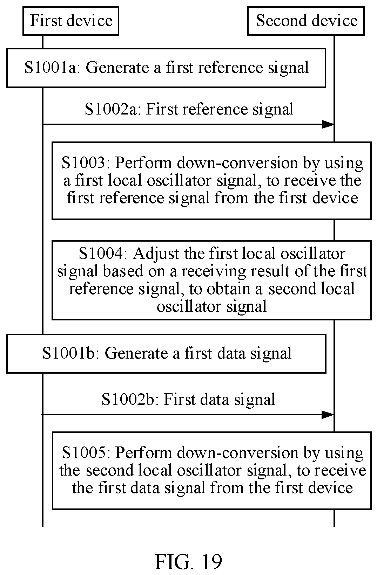

It is easy to understand that, in embodiments of this application, as shown in FIG. 19, S1001 may be divided into two steps: S1001a and S1001b.

S1001a: The first device generates the first reference signal. For the first reference signal, refer to the descriptions of S1001 in FIG. 10. Details are not described herein again.

S1001b: The first device generates the first data signal. For the first reference signal, refer to the descriptions of S1001 in FIG. 10. Details are not described herein again.

For the first device, the first device may first perform S1001a and then perform S1001b (as shown in FIG. 19), the first device may first perform S1001b and then perform S1001a, or the first device may simultaneously perform S1001a and S1001b (as shown in FIG. 10). This is not limited in embodiments of this application.

Similarly, in embodiments of this application, as shown in FIG. 19, S1002 may be divided into two steps: S1002a and S1002b.

S1002a: The first device sends the first reference signal to the second device. For an implementation process of S1002a, refer to the descriptions of S1002 in FIG. 10. Details are not described herein again.

S1002b: The first device sends the first data signal to the second device. For an implementation process of S1002b, refer to the descriptions of S1002 in FIG. 10. Details are not described herein again.

For the first device, the first device may first perform S1002a and then perform S1002b (as shown in FIG. 19), the first device may first perform S1002b and then perform S1002a, or the first device may simultaneously perform S1002a and S1002b (as shown in FIG. 10). This is not limited in embodiments of this application.

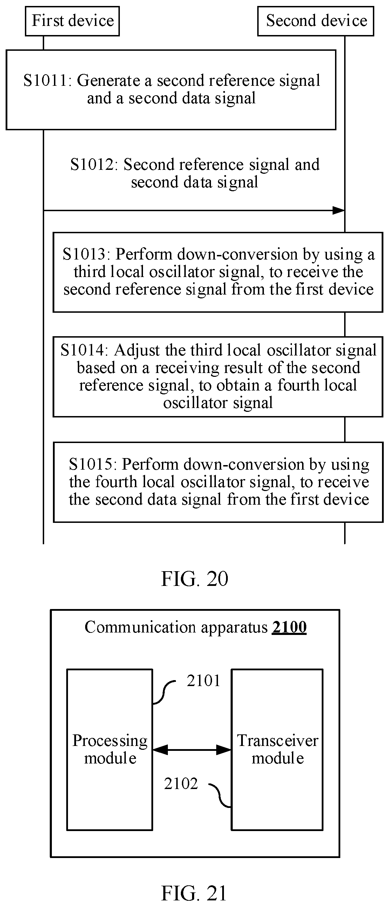

In some embodiments, after a period of time, the local oscillator of the second device accumulates a large frequency offset. In this case, as shown in FIG. 20, the frequency offset correction method 1000 in embodiments of this application further includes the following steps.

S1011: The first device generates a second reference signal and a second data signal.

For the second reference signal, refer to the descriptions of the first reference signal in S1001. For the second data signal, refer to the descriptions of the first data signal in S1001. Details are not described herein again.

A guard band of the second reference signal is the same as the guard band of the first reference signal, and a guard band of the second data signal is the same as the guard band of the first data signal.

FIG. 11 is used as an example. The first reference signal may be a reference signal in a periodicity 1, and the second reference signal may be a reference signal in a periodicity 2. The guard band of the second reference signal, for example, a bandwidth shown by the letter a, is greater than 0. The first data signal may be a data signal in the periodicity 1, and the second data signal may be a data signal in the periodicity 2. The guard band of the second data signal is 0.

Similarly, for the guard band in FIG. 12, FIG. 13, or FIG. 14, refer to the descriptions in FIG. 11. Details are not described herein again.

It is easy to understand that, in embodiments of this application, the guard band of the second reference signal may alternatively be different from the guard band of the first reference signal. For example, the guard band of the second reference signal is greater than the guard band of the first reference signal, or the guard band of the second reference signal is basically the same as the guard band of the first reference signal, and a difference between the two guard bands is within a specific range. Similarly, the guard band of the second data signal may alternatively be different from the guard band of the first data signal. For example, the guard band of the second data signal is greater than the guard band of the first data signal, or the guard band of the second data signal is basically the same as the guard band of the first data signal, and a difference between the two guard bands is within a specific range. This is not limited in embodiments of this application.

For the first device, after generating the second reference signal and the second data signal, the first device performs S1012.

S1012: The first device sends the second reference signal and the second data signal to the second device. Correspondingly, the second device receives the second reference signal and the second data signal from the first device.

For an implementation process of S1012, refer to the descriptions in S1002. Details are not described herein again.

Optionally, a bandwidth occupied by the second data signal is the same as the bandwidth occupied by the first data signal.

FIG. 11 is used as an example. In FIG. 11, the first data signal may be a data signal in the periodicity 1, and the second data signal may be a data signal in the periodicity 2. $B_{data} = 4 \cdot B_{fsk}$. In addition to the bandwidth occupied by the first data signal, $B_{data}$ further represents the bandwidth occupied by the second data signal.

Similarly, in FIG. 12, $B_{data} = 4 \cdot B_{fsk}$, and details are not described again.

Similarly, in FIG. 13 or FIG. 14, $B_{data} = 4 \cdot B_{ook}$, and details are not described again.

It is easy to understand that, when a data transmission rate is fixed, the first device transmits data signals (including the first data signal and the second data signal) by using a same bandwidth. For the first device serving as a signal transmit end, processing complexity of the first device can be reduced, and the signal bandwidth does not need to be frequently updated. For the second device serving as a signal receive end, the second device may also receive the data signal by using the fixed bandwidth. This also helps reduce processing complexity of the second device.

Optionally, a bandwidth occupied by the second reference signal is the same as the bandwidth occupied by the first reference signal.

FIG. 11 is used as an example. In FIG. 11, the first reference signal may be a reference signal in the periodicity 1, and the second reference signal may be a reference signal in the periodicity 2. $B_{rs} = 2 \cdot B_{fsk}$. In addition to the bandwidth occupied by the first reference signal, $B_{rs}$ further represents the bandwidth occupied by the second reference signal.

Similarly, in FIG. 12, $B_{rs} = 2 \cdot B_{fsk}$, and details are not described again.

Similarly, in FIG. 13 or FIG. 14, $B_{rs} = 2 \cdot B_{ook}$, and details are not described again.

It is easy to understand that the first device transmits reference signals (including the first reference signal and the second reference signal) by using a same bandwidth. For the first device serving as the signal transmit end, the processing complexity of the first device can be reduced, and the signal bandwidth does not need to be frequently updated. For the second device serving as the signal receive end, the second device may also receive the reference signal by using the fixed bandwidth, and the second device does not need to set a component like the filter to be bandwidth-adjustable. This also helps reduce the processing complexity of the second device.

Optionally, a time length of an interval between the second reference signal and the first reference signal is fixed. In other words, the first device periodically sends a reference signal. For example, the first reference signal is a reference signal in the periodicity 1, and the second reference signal is a reference signal in the periodicity 2. The periodicity 1 and the periodicity 2 are two adjacent periodicities. In comparison with aperiodic transmission of the reference signal, the second device does not need to continuously listen to the reference signal, to reduce power consumption of listening to the reference signal by the second device.

It is easy to understand that a time length of an interval between the second reference signal and the first reference signal may alternatively be unfixed. In other words, the reference signal is aperiodically sent. This is not limited in embodiments of this application.

For the second device, the second device performs S1013.

S1013: The second device performs down-conversion by using a third local oscillator signal, to receive the second reference signal from the first device.

For example, the third local oscillator signal is a local oscillator signal generated by the VCO in the receiver. In comparison with the second local oscillator signal, a frequency offset of a local oscillator signal generated by the VCO in the receiver increases after a period of accumulation. Correspondingly, a frequency offset of the third local oscillator signal is greater than the frequency offset of the second local oscillator signal.

For example, the down-conversion in S1013 may be understood as that the second device performs frequency mixing on the third local oscillator signal generated by the VCO and a signal (the signal includes the second reference signal) obtained through processing of the RF LNA, to implement spectrum migration. In other words, a spectrum of the signal obtained through processing of the RF LNA is migrated to the intermediate frequency, to receive the second reference signal.

S1014: The second device adjusts the third local oscillator signal based on a receiving result of the second reference signal, to obtain a fourth local oscillator signal.

A frequency offset of the fourth local oscillator signal is less than the frequency offset of the third local oscillator signal.

For an implementation process of S1014, refer to the descriptions in S1004. Details are not described herein again.

It is easy to understand that a difference between a frequency of the fourth local oscillator signal and the frequency of the second local oscillator signal is less than a threshold. For example, the frequency of the fourth local oscillator signal is the same as the frequency of the second local oscillator signal. In other words, the second device performs frequency offset correction again, to decrease the residual frequency offset of the local oscillator signal to a low level.

S1015: The second device performs down-conversion by using the fourth local oscillator signal, to receive the second data signal from the first device.

For example, the down-conversion in S1015 may be understood as that the second device performs frequency mixing on the fourth local oscillator signal generated by the VCO and a signal (the signal includes the second data signal) obtained through processing of the RF LNA, to implement spectrum migration. In other words, the spectrum of the signal obtained through processing of the RF LNA is migrated to the intermediate frequency, to receive the second data signal.

In other words, when a frequency offset of the second device reaches a high level again after a period of accumulation, the first device may send a reference signal again, namely, the second reference signal, so that the second device performs a frequency offset correction process repeatedly, to decrease the residual frequency offset of the local oscillator signal again. In this way, the frequency offset of the fourth local oscillator signal is less than the frequency offset of the third local oscillator signal.

When performing down-conversion by using the fourth local oscillator signal, the second device can accurately perform spectrum migration, for example, accurately migrate a spectrum of the second data signal to an expected frequency range (for example, a band-pass range that is set by a filter of the receiver), to reduce a signal energy loss. This also helps reduce interference caused by a signal on an adjacent channel and improve demodulation performance.

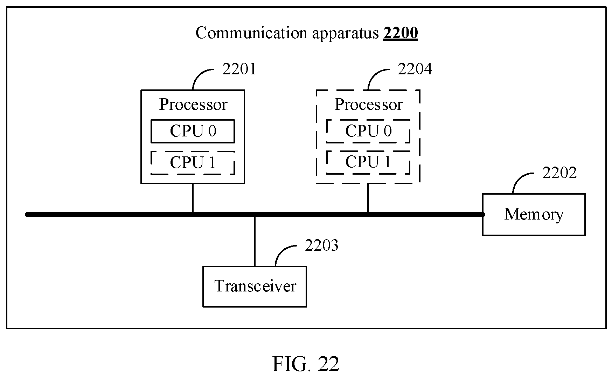

The foregoing describes in detail the method provided in embodiments of this application with reference to FIG. 10 to FIG. 20. The following describes in detail communication apparatuses configured to perform the method provided in embodiments of this application with reference to FIG. 21 and FIG. 22.

For example, FIG. 21 is a diagram 1 of a structure of a communication apparatus according to an embodiment of this application. As shown in FIG. 21, the communication apparatus 2100 includes a processing module 2101 and a transceiver module 2102. For ease of description, FIG. 21 shows only main parts of the communication apparatus 2100.

In some embodiments, the communication apparatus 2100 is applicable to the communication system shown in FIG. 1, and performs a function of the second device in the method shown in FIG. 10.

The transceiver module 2102 is configured to perform down-conversion by using a first local oscillator signal, to receive a first reference signal from a first device.

The processing module 2101 is configured to adjust the first local oscillator signal based on a receiving result of the first reference signal, to obtain a second local oscillator signal, where a frequency offset of the second local oscillator signal is less than a frequency offset of the first local oscillator signal.

The transceiver module 2102 is further configured to perform down-conversion by using the second local oscillator signal, to receive a first data signal from the first device, where a guard band of the first reference signal is greater than a guard band of the first data signal.

In a possible design, the transceiver module 2102 is further configured to: after performing down-conversion by using the second local oscillator signal to receive the first data signal from the first device, perform down-conversion by using a third local oscillator signal, to receive a second reference signal from the first device, where a frequency of the third local oscillator signal is different from a frequency of the second local oscillator signal, and a guard band of the second reference signal is the same as a guard band of the first reference signal.

The processing module 2101 is further configured to adjust the third local oscillator signal based on a receiving result of the second reference signal, to obtain a fourth local oscillator signal, where a frequency offset of the fourth local oscillator signal is less than a frequency offset of the third local oscillator signal.

The transceiver module 2102 is further configured to perform down-conversion by using the fourth local oscillator signal, to receive a second data signal from the first device, where a guard band of the second data signal is the same as the guard band of the first data signal.

In a possible design, a difference between a frequency of the fourth local oscillator signal and the frequency of the second local oscillator signal is less than a threshold.

In a possible design, a bandwidth occupied by the second data signal is the same as a bandwidth occupied by the first data signal.

In a possible design, a bandwidth occupied by the second reference signal is the same as a bandwidth occupied by the first reference signal.

In a possible design, a time length of an interval between the second reference signal and the first reference signal is fixed.

In a possible design, the receiving result of the first reference signal includes a first energy detection result and a second energy detection result, the first energy detection result is obtained by performing filtering processing on the first reference signal by a first filter, the second energy detection result is obtained by performing filtering processing on the first reference signal by a second filter, and a passband frequency of the first filter is less than a passband frequency of the second filter. In addition, when the first energy detection result is less than the second energy detection result, the frequency of the second local oscillator signal is greater than a frequency of the first local oscillator signal.

In a possible design, the receiving result of the first reference signal includes a first energy detection result and a second energy detection result, the first energy detection result is obtained by performing filtering processing on the first reference signal by a first filter, the second energy detection result is obtained by performing filtering processing on the first reference signal by a second filter, and a passband frequency of the first filter is less than a passband frequency of the second filter. In addition, when the first energy detection result is greater than the second energy detection result, the frequency of the second local oscillator signal is less than a frequency of the first local oscillator signal.

In a possible design, the processing module 2101 is further configured to: after the transceiver module 2102 performs down-conversion by using the first local oscillator signal to receive the first reference signal from the first device, and before the transceiver module 2102 performs down-conversion by using the second local oscillator signal to receive the first data signal from the first device, perform time synchronization based on the first reference signal, to obtain synchronization information, where the synchronization information indicates a time domain location of the first data signal.

In a possible design, a demodulation scheme of the first reference signal is on-off-keying OOK, and a demodulation scheme of the first data signal is frequency shift keying FSK.

In a possible design, a demodulation scheme of the first reference signal is FSK, and a demodulation scheme of the first data signal is FSK.

In a possible design, a demodulation scheme of the first reference signal is OOK, and a demodulation scheme of the first data signal is OOK.

In a possible design, a demodulation scheme of the first reference signal is FSK, and a demodulation scheme of the first data signal is OOK.

In a possible design, when the demodulation scheme of the first reference signal is FSK, and the demodulation scheme of the first data signal is FSK, a modulation order of the first reference signal is lower than a modulation order of the first data signal.

In a possible design, when the demodulation scheme of the first reference signal is FSK, and the demodulation scheme of the first data signal is FSK, a modulation order of the first reference signal is the same as a modulation order of the first data signal, there is a mapping relationship between an information bit transmitted by using the first reference signal and a first frequency, the first frequency is a part of M candidate frequencies, the first frequency is used to demodulate the first reference signal to obtain the information bit, and M is the modulation order of the first reference signal.

In a possible design, when the demodulation scheme of the first reference signal is OOK, a quantity of channels for the first reference signal is less than a quantity of channels for the first data signal.

In a possible design, when a demodulation scheme of the first reference signal is OOK or FSK, values of different elements in a bit sequence transmitted by using the first reference signal are the same, and in duration of the first reference signal, a frequency location and a bandwidth that are occupied by the first reference signal are fixed.

In a possible design, the bandwidth occupied by the first reference signal is less than the bandwidth occupied by the first data signal.

In a possible design, the guard band of the first data signal is 0.

In a possible design, a center frequency of the first reference signal is the same as a center frequency of the first data signal.

In some embodiments, the communication apparatus 2100 is applicable to the communication system shown in FIG. 1, and performs a function of the first device in the method shown in FIG. 10.

The processing module 2101 is configured to generate a first reference signal and a first data signal.

The transceiver module 2102 is configured to send the first reference signal and the first data signal to a second device, where a guard band of the first reference signal is greater than a guard band of the first data signal.

In a possible design, the processing module 2101 is further configured to: after the transceiver module 2102 sends the first reference signal and the first data signal to the second device, generate a second reference signal and a second data signal.

The transceiver module 2102 is further configured to send the second reference signal and the second data signal to the second device, where a guard band of the second reference signal is the same as the guard band of the first reference signal, and a guard band of the second data signal is the same as the guard band of the first data signal.

In a possible design, a bandwidth occupied by the second data signal is the same as a bandwidth occupied by the first data signal.

In a possible design, a bandwidth occupied by the second reference signal is the same as a bandwidth occupied by the first reference signal.

In a possible design, a time length of an interval between the second reference signal and the first reference signal is fixed.

In a possible design, a modulation scheme of the first reference signal is on-off-keying OOK, and a modulation scheme of the first data signal is frequency shift keying FSK.

In a possible design, a modulation scheme of the first reference signal is FSK, and a modulation scheme of the first data signal is FSK.

In a possible design, a modulation scheme of the first reference signal is OOK, and a modulation scheme of the first data signal is OOK.

In a possible design, a modulation scheme of the first reference signal is FSK, and a modulation scheme of the first data signal is OOK.

In a possible design, when the modulation scheme of the first reference signal is FSK, and the modulation scheme of the first data signal is FSK, a modulation order of the first reference signal is lower than a modulation order of the first data signal.

In a possible design, when the modulation scheme of the first reference signal is FSK, and the modulation scheme of the first data signal is FSK, a modulation order of the first reference signal is the same as a modulation order of the first data signal, there is a mapping relationship between an information bit transmitted by using the first reference signal and a first frequency, the first frequency is a part of M candidate frequencies, the first frequency is used to modulate the information bit to obtain the first reference signal, and M is the modulation order of the first reference signal.

In a possible design, when the modulation scheme of the first reference signal is OOK, a quantity of channels for the first reference signal is less than a quantity of channels for the first data signal.

In a possible design, when a modulation scheme of the first reference signal is OOK or FSK, values of different elements in a bit sequence transmitted by using the first reference signal are the same, and in duration of the first reference signal, a frequency location and a bandwidth that are occupied by the first reference signal are fixed.

In a possible design, the bandwidth occupied by the first reference signal is less than the bandwidth occupied by the first data signal.

In a possible design, the guard band of the first data signal is 0.

In a possible design, a center frequency of the first reference signal is the same as a center frequency of the first data signal.

Optionally, the transceiver module 2102 may include a receiving module and a sending module (not shown in FIG. 21). The transceiver module 2102 is configured to implement a sending function and a receiving function of the communication apparatus 2100.

Optionally, the communication apparatus 2100 may further include a storage module (not shown in FIG. 21). The storage module stores a program or instructions. When the processing module 2101 executes the program or the instructions, the communication apparatus 2100 is enabled to perform the function of the first device or the function of the second device in the method shown in FIG. 10.

It should be understood that, the processing module 2101 in the communication apparatus 2100 may be implemented by a processor or a processor-related circuit component, and may be a processor or a processing unit; and the transceiver module 2102 may be implemented by a transceiver machine or a transceiver machine-related circuit component, and may be a transceiver machine or a transceiver unit.

It is easy to understand that the communication apparatus 2100 may be a first device, may be a chip (system) or another part or component that may be disposed in the first device, or may be an apparatus including the first device. Alternatively, the communication apparatus 2100 may be a second device, may be a chip (system) or another part or component that may be disposed in the second device, or may be an apparatus including the second device. This is not limited in this application.

In addition, for technical effects of the communication apparatus 2100, refer to the technical effects of the method shown in FIG. 10. Details are not described herein again.

For example, FIG. 22 is a diagram 2 of a structure of a communication apparatus according to an embodiment of this application. The communication apparatus may be a first device, or may be a chip (system) or another part or component that may be disposed in the first device. Alternatively, the communication apparatus may be a second device, or may be a chip (system) or another part or component that may be disposed in the second device.

As shown in FIG. 22, the communication apparatus 2200 may include a processor 2201. Optionally, the communication apparatus 2200 may further include a memory 2202 and/or a transceiver machine 2203. The processor 2201 is coupled to the memory 2202 and the transceiver machine 2203, for example, may be connected through a communication bus.

The following describes each part in the communication apparatus 2200 in detail with reference to FIG. 22.

The processor 2201 is a control center of the communication apparatus 2200, and may be one processor, or may be a general term of a plurality of processing elements. For example, the processor 2201 is one or more central processing units (central processing units, CPUs), or may be an application-specific integrated circuit (application-specific integrated circuit, ASIC) or one or more integrated circuits configured to implement embodiments of this application, for example, one or more digital signal processors (digital signal processors, DSPs), or one or more field programmable gate arrays (field programmable gate arrays, FPGAs).

Optionally, the processor 2201 may perform various functions of the communication apparatus 2200 by running or executing a software program stored in the memory 2202 and invoking data stored in the memory 2202.

During specific implementation, in an embodiment, the processor 2201 may include one or more CPUs, for example, a CPU 0 and a CPU 1 shown in FIG. 22.

During specific implementation, in an embodiment, the communication apparatus 2200 may further include a plurality of processors, for example, the processor 2201 and a processor 2204 shown in FIG. 22. Each of the processors may be a single-core processor (single-CPU), or may be a multi-core processor (multi-CPU). The processor herein may be one or more devices, circuits, and/or processing cores configured to process data (for example, computer program instructions).

The memory 2202 is configured to store a software program for performing the solutions of this application, and the processor 2201 controls execution of the software program. For a specific implementation, refer to the foregoing method embodiments. Details are not described herein again.

Optionally, the memory 2202 may be a read-only memory (read-only memory, ROM) or another type of static storage device capable of storing static information and instructions, or a random access memory (random access memory, RAM) or another type of dynamic storage device capable of storing information and instructions, or may be an electrically erasable programmable read-only memory (electrically erasable programmable read-only memory, EEPROM), a compact disc read-only memory (compact disc read-only memory, CD-ROM) or other compact disc storage, optical disc storage (including a compressed optical disc, a laser disc, an optical disc, a digital versatile disc, a Blu-ray disc, or the like), a magnetic disk storage medium or another magnetic storage device, or any other medium capable of carrying or storing expected program code in a form of an instruction or a data structure and capable of being accessed by a computer, but is not limited thereto. The memory 2202 may be integrated with the processor 2201, or may exist independently and is coupled to the processor 2201 through an interface circuit (not shown in FIG. 22) of the communication apparatus 2200. This is not specifically limited in embodiments of this application.

The transceiver machine 2203 is configured to communicate with another communication apparatus. For example, the communication apparatus 2200 is a first device, and the transceiver machine 2203 may be configured to communicate with a second device. For another example, the communication apparatus 2200 is a second device, and the transceiver machine 2203 may be configured to communicate with a first device.

Optionally, the transceiver machine 2203 may include a receiver machine and a transmitter machine (not separately shown in FIG. 22). The receiver machine is configured to implement a receiving function, and the transmitter machine is configured to implement a sending function.

Optionally, the transceiver machine 2203 may be integrated with the processor 2201, or may exist independently and is coupled to the processor 2201 through an interface circuit (not shown in FIG. 22) of the communication apparatus 2200. This is not specifically limited in embodiments of this application.

It is easy to understand that a structure of the communication apparatus 2200 shown in FIG. 22 does not constitute a limitation on the communication apparatus. An actual communication apparatus may include more or fewer components than those shown in the figure, or combine some components, or have different component arrangements.

In addition, for technical effects of the communication apparatus 2200, refer to the technical effects of the communication method in the foregoing method embodiments. Details are not described herein again.

It should be understood that, the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It may be understood that the memory in embodiments of this application may be a volatile memory or a nonvolatile memory, or may include both the volatile memory and the nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example rather than a limitative description, random access memories (random access memory, RAM) in many forms may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by software, hardware (for example, circuit), firmware, or any combination thereof. When software is used for implementation, all or some of the foregoing embodiments may be implemented in a form of a computer program product. The computer program product includes one or more computer instructions or computer programs. When the computer instructions or the computer programs are loaded or executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by the computer, or a data storage device such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: only A exists, both A and B exist, and only B exists. A and B may be singular or plural. In addition, the character "/" in this specification usually represents an "or" relationship between the associated objects, but may also represent an "and/or" relationship. For details, refer to the context for understanding.

In this application, at least one means one or more, and a plurality of means two or more. "At least one of the following items (pieces)" or an expression similar thereto means any combination of these items, including a singular item (piece) or any combination of plural items (pieces). For example, at least one of a, b, or c may represent: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and the electronic hardware. Whether these functions are performed by hardware or software depends on particular applications and design constraint conditions of the technical solutions. A person skilled in the art may use different methods to implement the described functions for each specific application. However, it should not be considered that this implementation goes beyond the scope of this application.

It may be clearly understood by a person skilled in the art that, for the purpose of convenient and brief description, for specific working processes of the foregoing systems, apparatuses, and units, refer to corresponding processes in the foregoing method embodiments. Details are not described herein again.

In several embodiments provided in this application, it should be understood that the disclosed systems, apparatuses, and methods may be implemented in other manners. For example, the described apparatus embodiments are merely examples. For example, division into the units is merely logical function division. During actual implementation, another division manner may be used. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic, a mechanical, or another form.

The units described as separate parts may or may not be physically separate, and parts displayed as units may or may not be physical units, in other words, may be located in one position, or may be distributed on a plurality of network units. Some or all of the units may be selected based on an actual requirement to achieve the objectives of the solutions in the embodiments.

In addition, functional units in embodiments of this application may be integrated into one processing unit, or each unit may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to a conventional technology, or a part of the technical solutions may be implemented in a form of a software product. The computer software product is stored in a storage medium, and includes several instructions for instructing a computer device (which may be a personal computer, a server, or a communication device) to perform all or some of the steps of the methods described in embodiments of this application. The storage medium includes media that can store program code, such as a USB flash drive, a removable hard disk, a read-only memory (read-only memory, ROM), a random access memory (random access memory, RAM), a magnetic disk, an optical disc, or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A frequency offset correction method, comprising:

   performing, by a second device, down-conversion by using a first local oscillator signal, to receive a first reference signal from a first device;
   adjusting, by the second device, the first local oscillator signal based on a receiving result of the first reference signal, to obtain a second local oscillator signal, wherein a frequency offset of the second local oscillator signal is less than a frequency offset of the first local oscillator signal; and
   performing, by the second device, down-conversion by using the second local oscillator signal, to receive a first data signal from the first device, wherein a guard band of the first reference signal is greater than a guard band of the first data signal.

2. The method according to claim 1, wherein after the performing, by the second device, down-conversion by using the second local oscillator signal, to receive a first data signal from the first device, the method further comprises:

   performing, by the second device, down-conversion by using a third local oscillator signal, to receive a second reference signal from the first device, wherein a frequency of the third local oscillator signal is different from a frequency of the second local oscillator signal, and a guard band of the second reference signal is the same as the guard band of the first reference signal;
   adjusting, by the second device, the third local oscillator signal based on a receiving result of the second reference signal, to obtain a fourth local oscillator signal, wherein a frequency offset of the fourth local oscillator signal is less than a frequency offset of the third local oscillator signal; and
   performing, by the second device, down-conversion by using the fourth local oscillator signal, to receive a second data signal from the first device, wherein a guard band of the second data signal is the same as the guard band of the first data signal.

3. The method according to claim 2, wherein a difference between a frequency of the fourth local oscillator signal and the frequency of the second local oscillator signal is less than a threshold.

4. The method according to claim 2 or 3, wherein a bandwidth occupied by the second data signal is the same as a bandwidth occupied by the first data signal.

5. The method according to any one of claims 2 to 4, wherein a bandwidth occupied by the second reference signal is the same as a bandwidth occupied by the first reference signal.

6. The method according to any one of claims 2 to 5, wherein a time length of an interval between the second reference signal and the first reference signal is fixed.

7. The method according to any one of claims 1 to 6, wherein

   the receiving result of the first reference signal comprises a first energy detection result and a second energy detection result, the first energy detection result is obtained by performing filtering processing on the first reference signal by a first filter, the second energy detection result is obtained by performing filtering processing on the first reference signal by a second filter, and a passband frequency of the first filter is less than a passband frequency of the second filter; and

when the first energy detection result is less than the second energy detection result, the frequency of the second local oscillator signal is greater than a frequency of the first local oscillator signal; or when the first energy detection result is greater than the second energy detection result, the frequency of the second local oscillator signal is less than a frequency of the first local oscillator signal.

8. The method according to any one of claims 1 to 7, wherein after the performing, by a second device, down-conversion by using a first local oscillator signal, to receive a first reference signal from a first device, and before the performing, by the second device, down-conversion by using the second local oscillator signal, to receive a first data signal from the first device, the method further comprises:
performing, by the second device, time synchronization based on the first reference signal, to obtain synchronization information, wherein the synchronization information indicates a time domain location of the first data signal.

9. The method according to any one of claims 1 to 8, wherein a demodulation scheme of the first reference signal is on-off-keying OOK, and a demodulation scheme of the first data signal is frequency shift keying FSK;

a demodulation scheme of the first reference signal is FSK, and a demodulation scheme of the first data signal is FSK;
a demodulation scheme of the first reference signal is OOK, and a demodulation scheme of the first data signal is OOK; or
a demodulation scheme of the first reference signal is FSK, and a demodulation scheme of the first data signal is OOK.

10. The method according to claim 9, wherein when the demodulation scheme of the first reference signal is FSK, and the demodulation scheme of the first data signal is FSK,

a modulation order of the first reference signal is lower than a modulation order of the first data signal; or
a modulation order of the first reference signal is the same as a modulation order of the first data signal, there is a mapping relationship between an information bit transmitted by using the first reference signal and a first frequency, the first frequency is a part of M candidate frequencies, the first frequency is used to demodulate the first reference signal to obtain the information bit, and M is the modulation order of the first reference signal.

11. The method according to claim 9, wherein when the demodulation scheme of the first reference signal is OOK, a quantity of channels for the first reference signal is less than a quantity of channels for the first data signal.

12. The method according to any one of claims 1 to 7, wherein when a demodulation scheme of the first reference signal is OOK or FSK, values of different elements in a bit sequence transmitted by using the first reference signal are the same, and in duration of the first reference signal, a frequency location and a bandwidth that are occupied by the first reference signal are fixed.

13. The method according to any one of claims 1 to 12, wherein the bandwidth occupied by the first reference signal is less than the bandwidth occupied by the first data signal.

14. The method according to any one of claims 1 to 13, wherein the guard band of the first data signal is 0.

15. The method according to any one of claims 1 to 14, wherein a center frequency of the first reference signal is the same as a center frequency of the first data signal.

16. A frequency offset correction method, comprising:

generating, by a first device, a first reference signal and a first data signal; and
sending, by the first device, the first reference signal and the first data signal to a second device, wherein a guard band of the first reference signal is greater than a guard band of the first data signal.

17. The method according to claim 16, wherein after the sending, by the first device, the first reference signal and the first data signal to a second device, the method further comprises:

generating, by the first device, a second reference signal and a second data signal; and
sending, by the first device, the second reference signal and the second data signal to the second device, wherein a guard band of the second reference signal is the same as the guard band of the first reference signal, and a guard band of the second data signal is the same as the guard band of the first data signal.

18. The method according to claim 17, wherein a bandwidth occupied by the second data signal is the same as a bandwidth occupied by the first data signal.

19. The method according to claim 17 or 18, wherein a bandwidth occupied by the second reference signal is the same as a bandwidth occupied by the first reference signal.

20. The method according to any one of claims 17 to 19, wherein a time length of an interval between the second reference signal and the first reference signal is fixed.

21. The method according to any one of claims 16 to 20, wherein a modulation scheme of the first reference signal is on-off-keying OOK, and a modulation scheme of the first data signal is frequency shift keying FSK;

   a modulation scheme of the first reference signal is FSK, and a modulation scheme of the first data signal is FSK;
   a modulation scheme of the first reference signal is OOK, and a modulation scheme of the first data signal is OOK; or
   a modulation scheme of the first reference signal is FSK, and a modulation scheme of the first data signal is OOK.

22. The method according to claim 21, wherein when the modulation scheme of the first reference signal is FSK, and the modulation scheme of the first data signal is FSK,

   a modulation order of the first reference signal is lower than a modulation order of the first data signal; or
   a modulation order of the first reference signal is the same as a modulation order of the first data signal, there is a mapping relationship between an information bit transmitted by using the first reference signal and a first frequency, the first frequency is a part of M candidate frequencies, the first frequency is used to modulate the information bit to obtain the first reference signal, and M is the modulation order of the first reference signal.

23. The method according to claim 21, wherein when the modulation scheme of the first reference signal is OOK, a quantity of channels for the first reference signal is less than a quantity of channels for the first data signal.

24. The method according to any one of claims 16 to 20, wherein when a modulation scheme of the first reference signal is OOK or FSK, values of different elements in a bit sequence transmitted by using the first reference signal are the same, and in duration of the first reference signal, a frequency location and a bandwidth that are occupied by the first reference signal are fixed.

25. The method according to any one of claims 16 to 24, wherein the bandwidth occupied by the first reference signal is less than the bandwidth occupied by the first data signal.

26. The method according to any one of claims 16 to 25, wherein the guard band of the first data signal is 0.

27. The method according to any one of claims 16 to 26, wherein a center frequency of the first reference signal is the same as a center frequency of the first data signal.

28. A device, comprising a processor and a memory, wherein the processor is coupled to the memory, the memory stores program instructions, and when the program instructions stored in the memory are executed by the processor, the method according to any one of claims 1 to 15 is implemented.

29. A device, comprising a processor and a memory, wherein the processor is coupled to the memory, the memory stores program instructions, and when the program instructions stored in the memory are executed by the processor, the method according to any one of claims 16 to 27 is implemented.

30. A chip, comprising a processor and an input/output interface, wherein the input/output interface is configured to receive a signal from an apparatus other than the chip and transmit the signal to the processor, or send a signal from the processor to an apparatus other than the chip, and the processor is configured to implement the method according to any one of claims 1 to 27 by using a logic circuit or by executing code instructions.

31. A computer-readable storage medium, wherein the storage medium stores a computer program or instructions, and when the computer program or the instructions are executed, the method according to any one of claims 1 to 27 is implemented.

32. A communication system, comprising a second device and a first device, wherein

the second device is configured to perform the method according to any one of claims 1 to 15; and
the first device is configured to perform the method according to any one of claims 16 to 27.

**1000**

| First device **100** | ⟷ | Second device **200** |

FIG. 1a

FIG. 1b

FIG. 1c

Amplitude

Time

Frequency

f1

f0

Time

1st symbol    2nd symbol    3rd symbol

FIG. 2

Frequency

FSK f4 (11)

FSK f3 (10)

FSK f2 (01)

FSK f1 (00)

Time

FSK signal          Another signal

FIG. 3

Baseband signal

Level

Time

1st symbol

OOK signal

Amplitude

Time

FIG. 4

FIG. 6

FIG. 7

FIG. 8

EP 4 589 898 A1

FIG. 9

<u>**1000**</u>

```
┌──────────────┐                          ┌──────────────┐
│ First device │                          │ Second device│
└──────────────┘                          └──────────────┘
```

S1001: Generate a first reference signal
and a first data signal

S1002: First reference signal and first
data signal

S1003: Perform down-conversion by using
a first local oscillator signal, to receive the
first reference signal from the first device

S1004: Adjust the first local oscillator
signal based on a receiving result of the
first reference signal, to obtain a second
local oscillator signal

S1005: Perform down-conversion by using
the second local oscillator signal, to receive
the first data signal from the first device

FIG. 10

Frequency

Time

Periodicity 2

Periodicity 1

a

a

a

a

Reference signal (OOK)

Data signal (4FSK)

Guard band size of the reference signal

Another signal

Letter a: Guard band size of the reference signal

FIG. 11

FIG. 12

Reference signal (2FSK)    Data signal (4FSK)    Another signal

Letter a: Guard band size of the reference signal

Frequency

Time

Periodicity 1

Periodicity 2

a

a

a

a

Reference signal (OOK)

Data signal (four channels of OOK signals)

Another signal

Letter a: Guard band size of the reference signal

FIG. 13

Frequency

a

a

a

a

Periodicity 1                                   Periodicity 2

Time

▯▯ Reference signal (two channels of OOK signals)   ▨ Data signal (four channels of OOK signals)   ▢ Another signal

Letter a: Guard band size of the reference signal

FIG. 14

EP 4 589 898 A1

FIG. 15

FIG. 16

FIG. 17

First device                    Second device

S1001: Generate a first reference signal and a
first data signal

S1002: First reference signal and first data
signal

S1003: Perform down-conversion by using a
first local oscillator signal, to receive the first
reference signal from the first device

S1004: Adjust the first local oscillator signal
based on a receiving result of the first
reference signal, to obtain a second local
oscillator signal

S1006: Perform time synchronization based
on the first reference signal, to obtain
synchronization information

S1005: Perform down-conversion by using
the second local oscillator signal, to receive
the first data signal from the first device

FIG. 18

```
┌──────────────┐                    ┌───────────────┐
│ First device │                    │ Second device │
└──────────────┘                    └───────────────┘
        │                                    │
┌───────────────────────────────────────┐   │
│ S1001a: Generate a first reference signal │ │
└───────────────────────────────────────┘   │
        │                                    │
        │   S1002a: First reference signal   │
        │───────────────────────────────────▶│
        │                                    │
        │   ┌────────────────────────────────────────┐
        │   │ S1003: Perform down-conversion by using │
        │   │ a first local oscillator signal, to receive the │
        │   │ first reference signal from the first device │
        │   └────────────────────────────────────────┘
        │                                    │
        │   ┌────────────────────────────────────────┐
        │   │ S1004: Adjust the first local oscillator │
        │   │ signal based on a receiving result of the first │
        │   │ reference signal, to obtain a second local │
        │   │ oscillator signal │
        │   └────────────────────────────────────────┘
        │                                    │
┌──────────────────────────────────────┐    │
│ S1001b: Generate a first data signal  │    │
└──────────────────────────────────────┘    │
        │                                    │
        │   S1002b: First data signal         │
        │───────────────────────────────────▶│
        │                                    │
        │   ┌────────────────────────────────────────┐
        │   │ S1005: Perform down-conversion by using │
        │   │ the second local oscillator signal, to receive │
        │   │ the first data signal from the first device │
        │   └────────────────────────────────────────┘
        │                                    │
```

FIG. 19

First device | Second device

S1011: Generate a second reference signal and a second data signal

S1012: Second reference signal and second data signal

S1013: Perform down-conversion by using a third local oscillator signal, to receive the second reference signal from the first device

S1014: Adjust the third local oscillator signal based on a receiving result of the second reference signal, to obtain a fourth local oscillator signal

S1015: Perform down-conversion by using the fourth local oscillator signal, to receive the second data signal from the first device

FIG. 20

Communication apparatus **2100**

2101

Processing module

2102

Transceiver module

FIG. 21

Communication apparatus **2200**

2201

Processor

CPU 0

CPU 1

2204

Processor

CPU 0

CPU 1

2202

Memory

2203

Transceiver

FIG. 22

## INTERNATIONAL SEARCH REPORT

| International application No. |
| --- |
| **PCT/CN2023/131289** |

**A.    CLASSIFICATION OF SUBJECT MATTER**

H04L 27/00(2006.01)i

According to International Patent Classification (IPC) or to both national classification and IPC

**B.    FIELDS SEARCHED**

Minimum documentation searched (classification system followed by classification symbols)

IPC: H04L, H03B, H03L

Documentation searched other than minimum documentation to the extent that such documents are included in the fields searched

Electronic data base consulted during the international search (name of data base and, where practicable, search terms used)

CNTXT, ENTXT, DWPI, CNKI, 3GPP: 频偏, 频率偏移, 纠正, 校正, 纠错, 调整, 本振, 本地振荡, 本地晶振, 基准振荡, 参考信号, 参考符号, 数据信号, 数据符号, 唤醒信号, 数据信道, 业务信道, 上行, 下行, 保护带宽, 保护频段, 保护频带, 大于, 小于, 超过, 低于, frequency offset, correct, adjust, LO, local oscillator, RS, reference signal, data, wakeup signal, WUS, PDSCH, PUSCH, UL, uplink, DL, downlink, GB, guard band, larger, greater, higher, less, over, under

**C.    DOCUMENTS CONSIDERED TO BE RELEVANT**

| Category* | Citation of document, with indication, where appropriate, of the relevant passages | Relevant to claim No. |
| --- | --- | --- |
| A | CN 105337693 A (CHINA MOBILE COMMUNICATIONS CORP.) 17 February 2016 (2016-02-17)<br>    description, paragraphs 64-69 | 1-32 |
| A | CN 108028739 A (LG ELECTRONICS INC.) 11 May 2018 (2018-05-11)<br>    entire document | 1-32 |
| A | WO 2022198339 A1 (NANOWAVE TECHNOLOGIES INC.) 29 September 2022 (2022-09-29)<br>    entire document | 1-32 |
| A | SONY. "Frequency Tracking in Long NB-PUSCH Transmission"<br>*3GPP TSG RAN WG1 NB-IoT Ad-Hoc Meeting, R1-161879,* 24 March 2016 (2016-03-24),<br>    entire document | 1-32 |
| A | INTERDIGITAL. "DL Data Scheduling"<br>*3GPP TSG RAN WG1 Meeting #89, R1-1709010,* 19 May 2017 (2017-05-19),<br>    entire document | 1-32 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **09 January 2024** | **15 January 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/131289**

| Patent document cited in search report | | | Publication date (day/month/year) | Patent family member(s) | | | Publication date (day/month/year) |
|---|---|---|---|---|---|---|---|
| CN | 105337693 | A | 17 February 2016 | None | | | |
| CN | 108028739 | A | 11 May 2018 | EP | 3340520 | A1 | 27 June 2018 |
| | | | | WO | 2017034125 | A1 | 02 March 2017 |
| | | | | US | 2018248662 | A1 | 30 August 2018 |
| WO | 2022198339 | A1 | 29 September 2022 | CA | 3213358 | A1 | 29 September 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211500478

- CN 202211690587